# EUROPÄISCHE PATENTSCHRIFT

(11) **EP 4 171 998 B1**
(45) Veröffentlichungstag und Bekanntmachung des Hinweises auf die Patenterteilung: **21.05.2025**
(21) Anmeldenummer: 21755725.5
(22) Anmeldetag: 30.07.2021
(51) Int. Cl.: B60R 5/04, B60P 1/00, B60P 1/54, B66C 23/44, B66D 3/18

(54) **KRAFTFAHRZEUG MIT WENISTGENS EINER IN DER HECKKLAPPE INTEGRIERTEN HEBEVORRICHTUNG**
MOTOR VEHICLE WITH AT LEAST ONE LIFTING DEVICE INTEGRATED IN THE TAILGATE
VÉHICULE À MOTEUR AVEC AU MOINS UN DISPOSITIF DE LEVAGE INTÉGRÉ DANS LE HAYON ARRIÈRE

(30) Priorität: 07.09.2020 DE 102020005485; 25.01.2021 DE 102021101477
(43) Veröffentlichungstag der Anmeldung: 03.05.2023
(73) Patentinhaber: Bontinta Systems Engineering Services GmbH, 85591 Vaterstetten (DE)
(72) Erfinder: BENTA, Daniel, 85591 Vaterstetten (DE)
(74) Vertreter: von Tietzen und Hennig, Nikolaus
(86) Internationale Anmeldenummer: PCT/EP2021/071475
(87) Internationale Veröffentlichungsnummer: WO 2022/048834

(56) Entgegenhaltungen:
- WO-A2-03/080394
- DE-A1- 102004 051 622
- DE-U1- 202009 014 248
- FR-A1- 3 010 967
- US-A- 4 002 321
- US-A- 5 209 435
- US-A1- 2003 141 733
- US-A1- 2018 326 887
- US-B1- 7 543 873

## Beschreibung

Die Erfindung betrifft eine integrierte Nutzlast-Ladevorrichtung für Kraftfahrzeuge, die eine nach-oben-öffnende Kofferraum- oder Laderaumklappe besitzen.

Obwohl in der Patentliteratur viele Vorrichtungen beschrieben sind, die für die Entlastung des Anwenders bei Belade- und Entladeaktivitäten bestimmt sind, sieht man in den aktuell zugelassenen Personen-Fahrzeugen keine solche Vorrichtungen. Kein Fahrzeughersteller bietet eine solche Option für Personenfahrzeuge an, weder als Ausstattungsvariante noch als Nachrüst-Option, obwohl der Nutzwert einer solchen Lösung evident ist.

Für Nutzfahrzeuge gibt es bspw. Nachrüstoptionen für den Einbau von ausziehbaren Ladeböden/Schubläden. Jedoch ist hier keine Lösung für das Heben bzw. Senken der Nutzlast geboten. Gründe hierfür können die mechanische Komplexität der Systeme, der Wartungsaufwand im Betrieb und der hohe Änderungsaufwand des Fahrzeuges (Kofferraumes) seien.

Aus der Patentliteratur sind bis jetzt verschiedene Systeme für ein vereinfachtes Be- und Entladen des Laderaums beschrieben, wie bspw. in der DE10312466A1, DE10012767A1, EP1145908A2, DE19731324A1, DE10054572A1, DE10006617C1 oder DE19815466A1. Die technischen Lehren dieser Schriften erschöpfen sich in Vorrichtungen, die entweder über Hubeinrichtungen oder Rollenführungen ein Aus- und Einfahren des mobilen Ladebodens ermöglichen und über Hebelmechanismen die Stellung des Ladebodens absichern. Diese Ladeböden sind meistens in der Höhe verstellbar, ein Aspekt, welcher die mechanische Realisierung aufwendig, wartungsintensiv und sperrig macht. Ein weiteres Problem dieser Vorrichtungen ist auch, dass diese den Anwender beim Auf- und Abladen schwerer Laststücke nicht, oder kaum entlasten.

Verschiedene Systeme für ein vereinfachtes Be- und Entladen des Laderaums sind zudem in EP2193958A1, US4969793, US5054578 oder US8398358 beschrieben, die auf dem Einsatz von Ladegestellen basieren, die Gepäckgut durch das reversible Ausfahren eines Korbgestells in den Gepäckraum befördern. Das Problem dieser Vorrichtungen ist, dass es relativ komplexe mechanische Aufbauten sind mit vielen beweglichen Teile, die eine aufwendige Wartung und Inbetriebnahme erfordern und bei Nichtnutzung ein wesentliches Volumen des Kofferraums in Anspruch nehmen, oder eine aufwendige Montage bzw. Demontage erfordern.

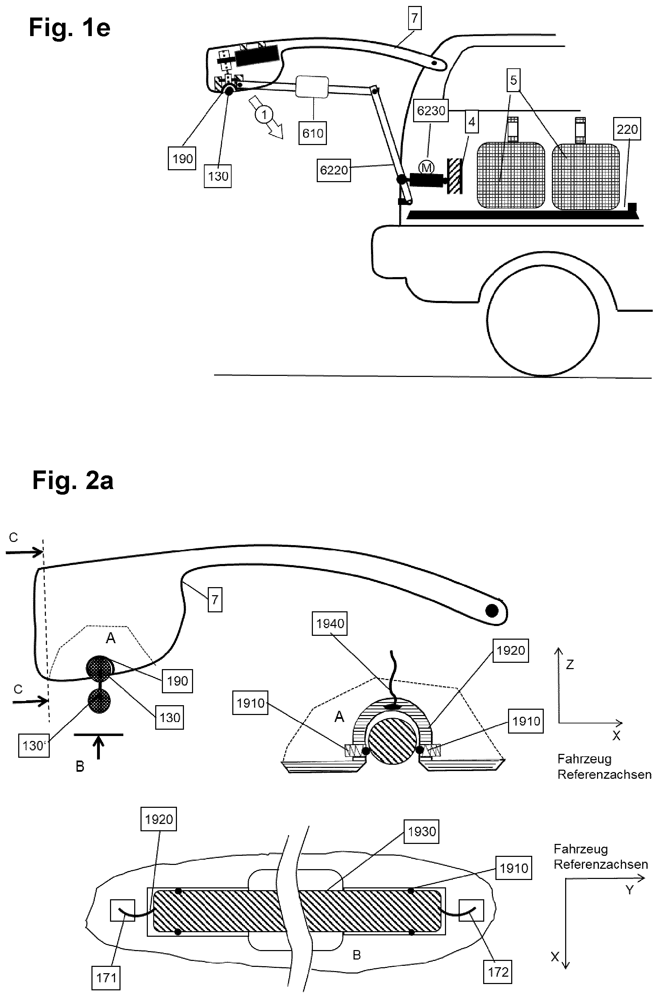

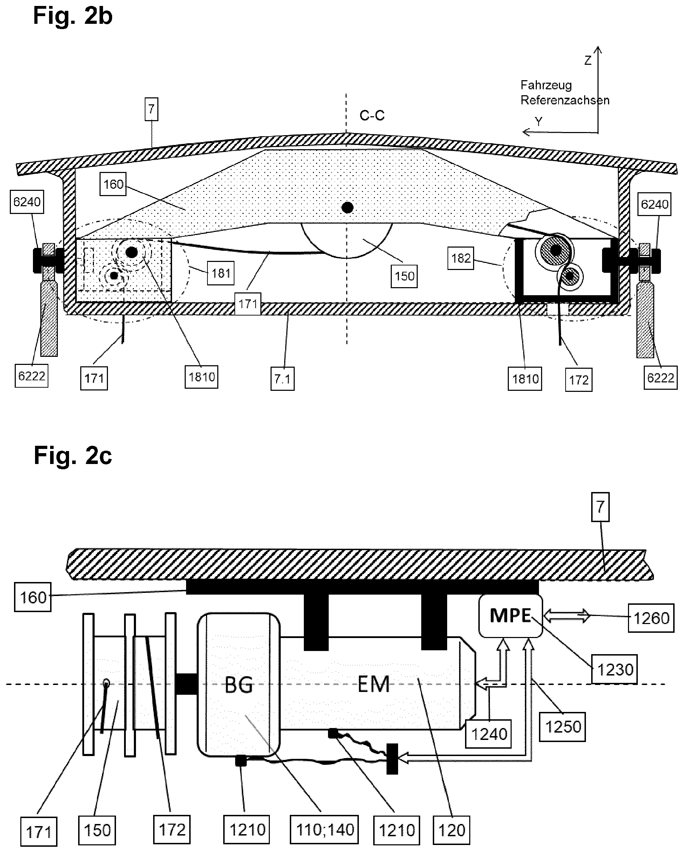

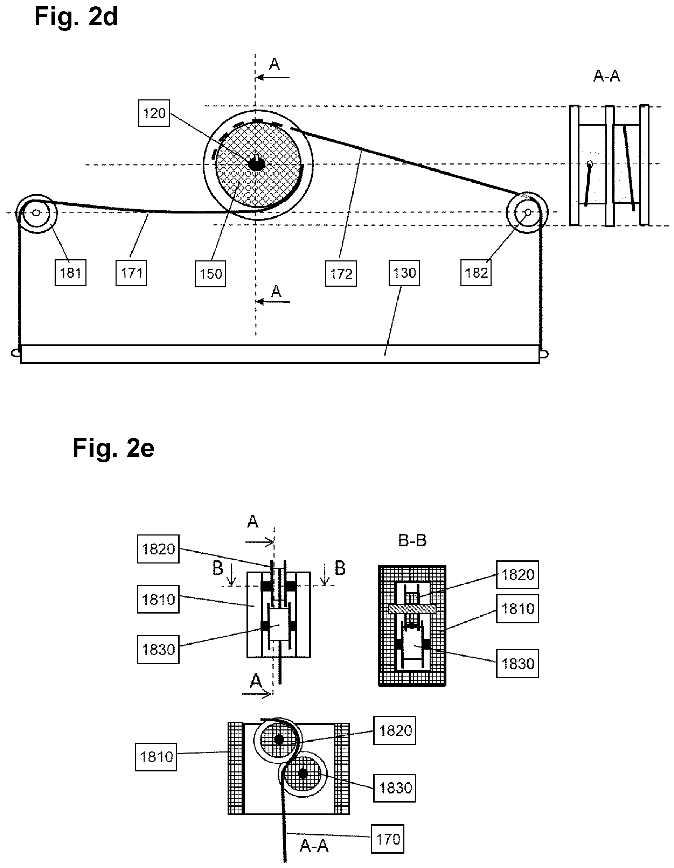

Eine kranartige Hebevorrichtung ist aus der US 7,810,790 bekannt. Hierbei handelt es sich um eine Hebevorrichtung, die am Kofferraumdach oder an der Heckklappe fixiert ist. Unberücksichtigt bleibt bei diesem Konzept jedoch, dass bei Lastgewichten, die den Einsatz einer Hebeeinrichtung notwendig werden lassen, hohe Belastungen auftreten, die eine Überdimensionierung des Heckklappenrahmens erfordern (die Hauptlast agiert mittig an der Heckklappe, wobei die Stützpunkte, die die Hauptlast auf dem Fahrzeugrahmen übertragen, seitlich an der Heckklappe angebracht sind). In diesem Fall wird bei höheren Belastungen die Heckklappe einem beachtlichen Biegemoment ausgesetzt. Eine Einbringung der Hebevorrichtung an dem Kofferraumdach, wie in der Fig. 2 des US-Patents dargestellt, erfordert die Interaktion des Anwenders, der durch zusätzlichen Krafteinsatz, die Ladung orientieren, und in / aus dem Kofferraum schieben / holen muss. So entstehen zusätzliche Verletzungsrisiken (Einklemm- und Quetschgefahr). Eine weitere Hebevorrichtung für Fahrzeuge ist aus der US 5209435 A bekannt. Die offenbart ein Fahrzeug mit den Merkmalen des Oberbegriffs des Anspruchs 1.

Der Erfindung liegt die Aufgabe zugrunde, ein Ladesystem für den Koffer-/Laderaum eines Fahrzeuges zu schaffen, welches den Anwender beim Heben, Beladen, Entladen und Senken von schweren Gepäckstücken entlastet.

Erfindungsgemäß wird die Aufgabe durch ein Kraftfahrzeug gemäß den Merkmalen des Anspruchs 1 gelöst. Vorteilhafte Ausführungen der Hebevorrichtung sind Gegenstand der abhängigen Ansprüche.

Erfindungsgemäß wird eine Hebevorrichtung zur Integration in einer Heckklappe eines Kraftfahrzeugs vorgeschlagen. Die Hebevorrichtung umfasst ein elektromotorisches Zugseilsystem zum Anheben und Absenken wenigstens einer aufgenommenen Last. Die Vorrichtung weist hierzu wenigstens ein Lastkabel auf, das mittels wenigstens einer elektromotorisch angetriebenen Aufnahmerolle auf- und abgespult werden kann. Die wenigstens eine Aufnahmerolle ist in die Heckklappe eines Fahrzeuges integrierbar, so dass bei geöffneter Heckklappe das Lastkabel in Richtung des Bodens im Bereich des Fahrzeughecks zur Aufnahme einer dort positionierten Last abgelassen werden kann. Für eine optimierte Lastverteilung werden wenigstens zwei parallele Kabelstränge von bzw. aus der Heckklappe in Richtung des Bodens geführt. Die Enden der Kabelstränge sind über eine Querstange miteinander verbunden, die als Lastaufnahmepunkt für die Befestigung der Last dient. Über die Querstange wird die angehängte Last bzw. die Lastkraft auf die Parallelstränge verteilt.

Idealerweise sind die Kabelstränge im Bereich der äußeren Enden der Hecklappe aus dieser herausgeführt, d.h. der Abstand zwischen den Kabelsträngen ist maximal. Die Vorrichtung umfasst geeignete Führungsmittel, die sich idealerweise im Randbereiche der Heckklappe integrieren lassen.

Zur Vereinfachung der Montage und insbesondere für die Möglichkeit einer einfachen Nachrüstung beliebiger PKW-Typen ist wenigstens ein Montagerahmen vorgesehen, an diesem die wenigstens eine Aufnahmerolle inklusive elektromotorischem Antrieb und gegebenenfalls die Kabelführung gelagert sind. Der Montagerahmen ist vorzugsweise derart ausgeführt ist, dass sich dieser in Einbaulage innerhalb der Heckklappe nahezu über die gesamte Breite der Hecklappe (Fahrzeugquerachse) erstreckt. Der Montagerahmen vereinfacht nicht nur die Montage der Hebevorrichtung, sondern verstärkt bzw. versteift zudem die Karosserie der Heckklappe. Dies ist insbesondere für das Heben schwerer Lasten wünschenswert, da ansonsten eine Verwindung der bestehenden Heckklappenkarosserie droht. Besonders vorteilhaft ist es, wenn die Führungsmittel an den äußeren Enden des Montagerahmens, d.h. mit maximalen Abstand zueinander am Montagerahmen gelagert sind.

Die Kabelführung pro Kabelstrang kann gemäß vorteilhafter Ausführung jeweils eine Rollenanordnung aufweisen, um das Lastkabel an der gewünschten Austrittstelle aus der Heckklappe herauszuführen, wobei die Rollenanordnungen an den freien Enden des Montagerahmens gelagert sind, während die wenigstens eine Aufnahmerolle mittig zwischen den Rollenanordnungen am Montagerahmen gelagert ist. Dadurch ergibt sich eine optimale, idealerweise symmetrische Lastverteilung auf den Montagerahmen.

Das Lastkabel kann aus einem Kabel bestehen. Bevorzugt ist jedoch die Ausführung mittels zwei separater Kabel bzw. getrennter Kabelabschnitte mit gleicher Länge. In diesem Fall umfasst die Aufnahmerolle zwei, auf der Rollenachse nebeneinanderliegende Spulen zum Auf- und Abwickeln der Kabel bzw. Kabelabschnitte. Durch die Drehbewegung werden die separaten Kabelabschnitte in entgegengesetzter Richtung auf der jeweils zugeordneten Spule auf- bzw. abgewickelt.

Der elektromotorische Antrieb der Aufnahmerolle kann durch einen Elektromotor gebildet sein, vorzugsweise in Form eines Spindelantriebes. Zusätzlich können wenigstens ein Getriebe und wenigstens eine Bremse, insbesondere elektromechanische Bremse vorgesehen sein. Letzterer dient zur Umsetzung einer Notbrems- und manuellen Freigabefunktion im Falle einer zuvor ausgelösten Notbremsung. Ebenso ist es vorstellbar, eine geeignete Sensorik zur Messung des aufgenommenen Lastgewichtes und/oder des Hubweges und/oder der Betriebstemperatur des Antriebs einzusetzen.

Gemäß der Erfindung ist wenigstens ein, vorzugsweise zwei Positionierungselemente vorgesehen, die endseitig am Montagerahmen der Hebevorrichtung gelagert und mit ihrem anderen Ende am Fahrzeugrahmen des Kraftfahrzeuges lagerbar sind. Hierdurch wird eine unmittelbare Kraftübertragung von dem Montagerahmen in die Fahrzeugkarosserie ermöglicht, und die vergleichsweise verwindungsanfällige Heckklappe des Fahrzeuges wird vor einem zu hohen Krafteintrag geschützt. Die Positionierungselemente können beliebige ausgeführt sein, bspw. als Gestänge. Einzige Voraussetzung ist eine zufriedenstellende Kraftübertragung in die Fahrzeugkarosserie. Unter der Fahrzeugkarosserie wird in diesem Zusammenhang der Fahrzeugrahmen, insbesondere das tragende Fahrzeuggestell ohne die Heckklappe verstanden.

In einer bevorzugten Ausführung kann das wenigstens eine Positionierungselement eine Hebelkinematik umfassen, die mit einer Öffnungs-/Schließbewegung einer Fahrzeugheckklappe verstellbar ist. Insbesondere kann die Hebelkinematik selbsttätig während der Bewegung der Heckklappe verstellbar sein, entweder geführt durch die Bewegung der Heckklappe oder optional antriebsgetrieben. Alternativ zu einer Hebelkinematik ist gemäß einer vereinfachten Ausführung auch vorstellbar, die Positioniermittel als einfache Stangen oder Stützen auszuführen, die vom Nutzer manuell in die gewünschte stützende Position zum Kraftabtrag aus dem Montagerahmen in die Fahrzeugkarosserie verbracht werden müssen. Denkbar ist in diesem Fall eine Ausführung mit ein oder mehreren Gelenken, die ein Aus- oder Einklappen der Stützen erlaubt.

Aus Sicherheitsgründen kann es sinnvoll sein, wenigstens ein Fixierungsmittel für wenigstens ein Positionierungselement vorzuhalten, um das Positionierungsmittel in der stützenden Stellung für den Kraftabtrag vom Montagerahmen in die Fahrzeugkarosserie zu arretieren. Sinnvollerweise wird der Status des Fixierungsmittels sensorgestützt überwacht, um insbesondere auch die Antriebssteuerung der Hebevorrichtung zu beeinflussen.

Wie vorstehend angedeutet kann die Hebelkinematik einen eignen Antrieb zur Verstellung umfassen. Ein solcher Antrieb kann elektrischer oder elektro-hydraulischer Natur sein.

Die Hebevorrichtung kann vorzugsweise eine separate Steuereinheit umfassen, die idealerweise mit einer geeigneten Schnittstelle zur Anbindung an ein bestehendes Bus-System eines Kraftfahrzeuges ausgestattet ist. Die Steuereinheit umfasst ein zugeordnetes Bedienmodul zur Betätigung des Antriebs der Hebevorrichtung zum Ab- und Aufwickeln des Lastkabels. Vorstellbar ist eine softwarebasierte Lösung für die Steuereinheit, die konfiguriert ist, eine Freigabe des elektromotorischen Antriebs der Aufnahmerolle gemäß einem Bedienkonzept und/oder in Abhängigkeit vom Zustand der Positionierungselemente bzw. der Hebelkinematik und/oder des Fahrzeuges zu steuern.

Es besteht die Möglichkeit Bedienelemente für die die manuelle Bedienung der Steuereinheit und somit der Hebevorrichtung direkt am Fahrzeug, insbesondere im Bereich der Heckklappe anzuordnen. Alternativ oder zusätzlich sind mobile Lösungen denkbar, bspw. mittels Funkfernbedienung, insbesondere mittels des Fahrzeugschlüssels, und/oder appbasiert mittels mobilen Endgerät wie Smartphone, Wearable, Tablet, Laptop, usw.

Neben des erfindungsgemäßen Kraftfahrzeugs mit einer Hebevorrichtung betrifft die Erfindung ebenso ein Ladebodenmodul zum Einbau in den Kofferraum des Kraftfahrzeuges. Das vorgeschlagene Ladebodenmodul ist bevorzugt in Kombination mit der Hebevorrichtung einsetzbar.

Die erfindungsgemäße Hebevorrichtung umfasst ein Bodengestell, an dessen Unterseite ein oder mehrere Stützelemente zur Abstützung des Moduls auf dem Laderaumboden eines Kraftfahrzeuges angeordnet sind. Auf der Oberseite des Bodengestells sind ein oder mehrere Tragrollen installiert. Eine mobile Ladeplatte ist mit Hilfe der Tragrollen relativ zum Bodengestell in Längsrichtung verschieblich auf diesem gelagert und so innerhalb eines Kraftfahrzeuges bzw. dessen Laderaum anordenbar, so dass die Ladeplatte aus dem Laderaum heraus und in den Laderaum hinein in Fahrzeuglängsrichtung bewegt werden kann.

Hierzu sind zwei Führungsmodule mit Verbindungsstellen zur Fixierung an den Seitenwänden eines Fahrzeugladeraumes vorgesehen, wobei die Führungsmodule jeweils wenigstens eine, auf der Oberfläche der Ladeplatte abrollende Führungsrolle aufweisen, um die Ladeplatte entlang ihrer Längsseite zu führen.

Ergänzend können die Führungsmodule jeweils wenigstens eine laterale Führungsrolle aufweisen, die entlang der Längskante der Ladeplatte abrollt. Dadurch wird eine ausreichende Längsführung gewährleistet und eine unerwünschte Bewegung der Ladeplatte in Fahrzeugquerrichtung verhindert.

Ein, zumindest abschnittsweise um die Ladeplatte umlaufender und mit dem Bodengestell verbundener Rahmen kann vorgesehen sein, der vorzugsweise ein oder mehrere Verriegelungselemente umfasst, um die Ladeplatte gegenüber dem Bodengestell temporär festzulegen.

Das Ladebodenmodul bzw. die mobile Ladeplatte kann manuell bewegbar sein. Bevorzugt ist jedoch die Integration eines geeigneten Antriebes zur motorischen Bewegung der Ladeplatte relativ zum Bodengestell. Ein solcher Antrieb kann bspw. durch wenigstens eine angetriebene Tragrolle realisiert sein, die auf der Unterseite der Ladeplatte abrollt und die Platte in Längsrichtung des Fahrzeuges dadurch bewegt. Alternativ kann der Antrieb auch durch einen Zugseilantrieb umgesetzt sein.

Vorteilhaft kann in das Bodengestell eine Lastsensorik zur Erfassung des Lastgewichtes der Beladung der Ladeplatte integriert sein, um eine Überladung und somit mechanische Überlastung der Karosserie bzw. Überlast des Antriebs des Ladebodenmoduls zu vermeiden.

Auch das Ladebodenmodul weist eine Steuereinheit mit Bedienfeld zur Betätigung des Antriebs des Lastbodenmoduls auf.

Wie bereits vorstehend ausgeführt ist bietet insbesondere die Kombination aus der vorgenannten Hebevorrichtung und dem erfindungsgemäßen Lastbodenmodul eine besonders herausragende Lösung, um die Be- und Entladung des Kofferraums eines Kraftfahrzeuges zu ermöglichen. In diesem Fall ist es vorteilhaft, wenn die Hebevorrichtung und das Lastbodenmodul eine gemeinsame, zentrale Steuereinheit aufweisen, die über eine Schnittstelle an einen Bus eines Kraftfahrzeuges angebunden werden kann.

Das erfindungsgemäße Kraftfahrzeug mit dem Be- und Entladesystem soll die Nachteile eines komplexen mechanisch zusammenhängenden Hebesystems vermeiden, indem es modular aufgebaut, zentral gesteuert und in die Fahrzeugkarosserie integrierbar ist. Damit soll auch erreicht werden, dass das Nutzvolumen des Laderaumes nur minimal durch das Be- und Entladesystem, insbesondere das Lastbodenmodul reduziert wird. Die Komponenten der Erfindung sollen so realisiert sein, dass das Be- und Entladesystem bzw. die Hebevorrichtung und/oder das Lademodul in den Fabrikationsprozess des Fahrzeugherstellers intergiert werden kann und somit als Option bei der Fahrzeugbestellung ausgewählt werden kann. Eine Nachrüstung des Fahrzeuges soll auch möglich sein (soweit die Bauweise des Fahrzeuges das erlaubt). Für den Anwender soll die Arbeit mit der Last bei Aktivitäten beim Be- und Entladen minimiert werden. Der Anwender soll minimal durch die Hantierung der Last belastet werden. Heben und Beförderung der Last in und aus dem Laderaum/Kofferraum sollen durch das Be- und Entladesystem erledigt werden.

Die Steuerung der Lastmanipulation soll über ein Bedienfeld erfolgen. Nichtdestotrotz soll der Anwender für die korrekte Einstellung des Be- und Entladesystems und die Hantierung / Absicherung der Nutzlast die Verantwortung tragen. Das System soll den Betrieb außerhalb der Spezifikation (mechanische / elektrische und thermische Parameter) erkennen und den Anwender warnen um das Schadensrisiko zu minimieren. Die einzelnen Komponenten wie Hebevorrichtung und Lastbodenmodul sollen in verschiedenen Kombinationsvarianten realisiert werden können (z.B. Motorisierungsgrad, Last-Kapazität), um somit verschiedene Bedienkomfort-Stufen ermöglichen zu können (Teilautomatisierung des Lade- und Entladeprozesses; manuelle Bedienung der Ladeplatte; manuelles / motorisiertes Öffnen und Schließen der Laderaum-Klappe / Kofferraumdeckel, Fernbedienung).

Weitere Vorteile und Eigenschaften der Erfindung sollen anhand der in den Figuren dargestellten Ausführungsbeispiele näher erläutert werden. Es zeigen:
- Fig. 1a-1e:: Abbildungen des Be- und Entladesystems in chronologischer Abfolge beim Heben einer Last,
- Fig. 2a-2e:: Darstellungen der Hebevorrichtung,
- Fig. 3a-3e:: Darstellungen des Lastbodenmodul,
- Fig. 4a-4c:: Darstellungen des Halterungsmoduls der Hebevorrichtung,
- Fig. 5a-5d:: Darstellungen des Lastträgers der Hebevorrichtung,
- Fig. 6a-6d:: Darstellungen unterschiedlicher Bedienelemente für das Be- und Entladesystem,

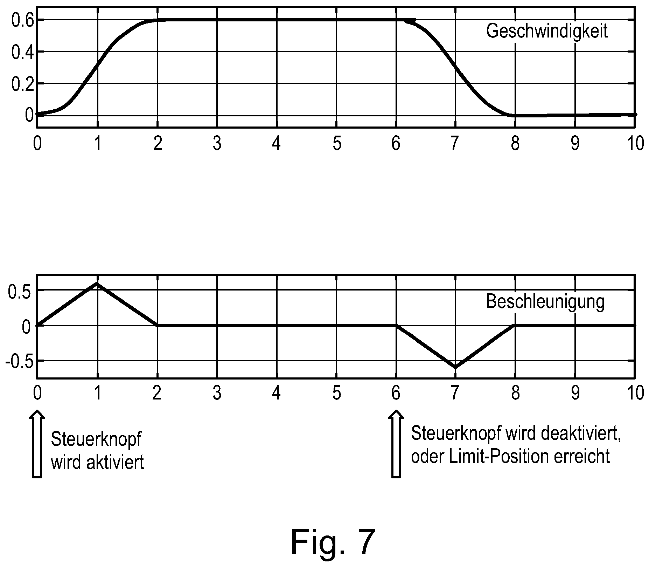

- Fig. 7:: Geschwindigkeits- und Beschleunigungsdiagramm der Antriebe der Hebevorrichtung oder des Lademoduls während eines Bremsvorgangs,
- Fig. 8:: Geschwindigkeits- und Beschleunigungsprofil der Vertikalbewegung der Querstange beim Lastanhängen und
- Fig. 9:: Bremsprofil des Antriebs der Hebevorrichtung beim Not-Aus.

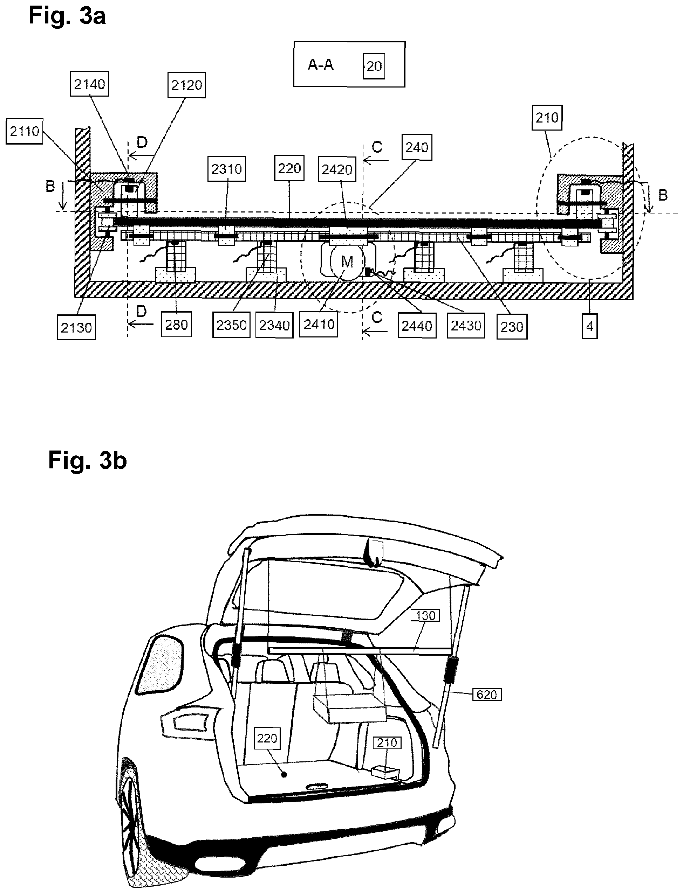

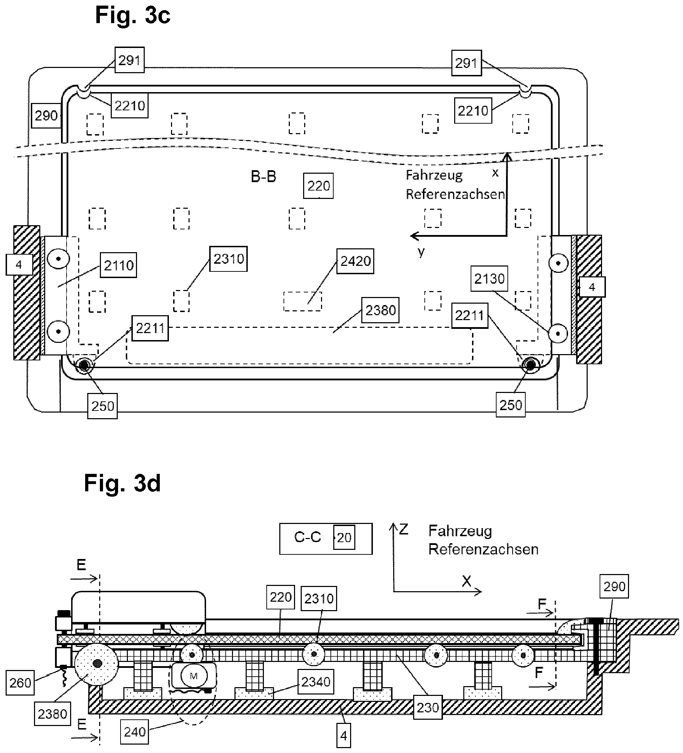

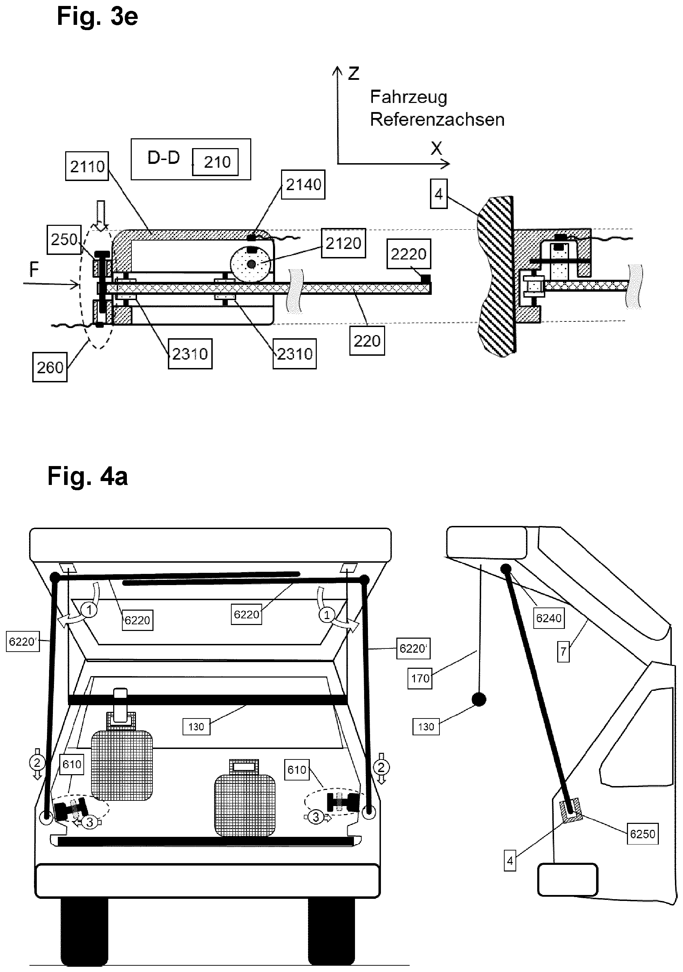

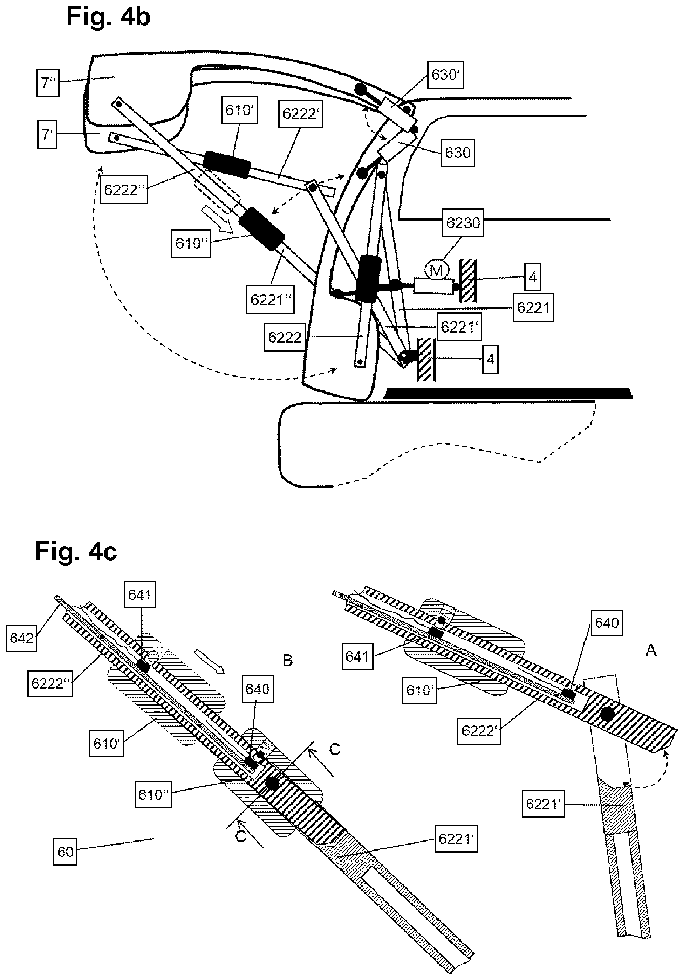

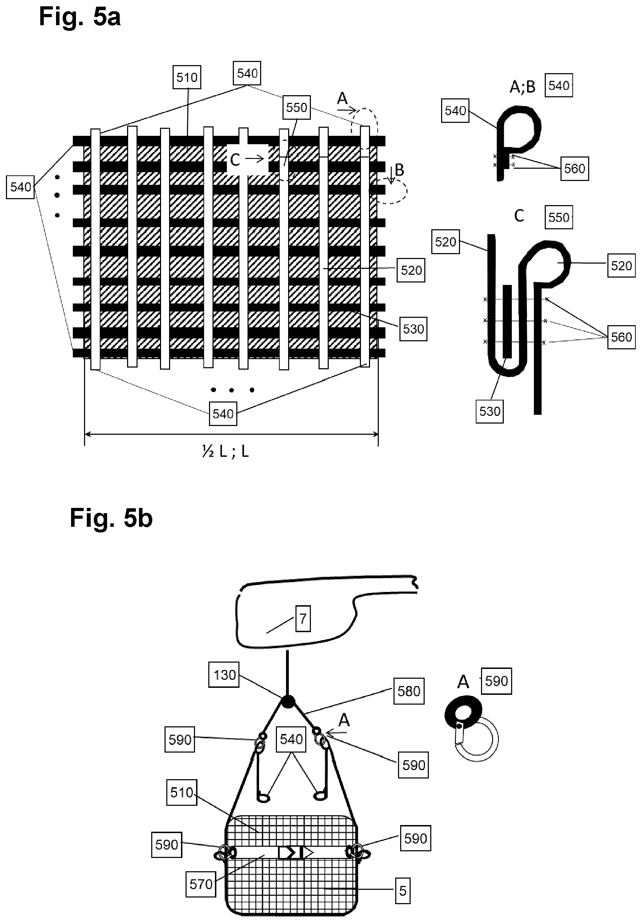

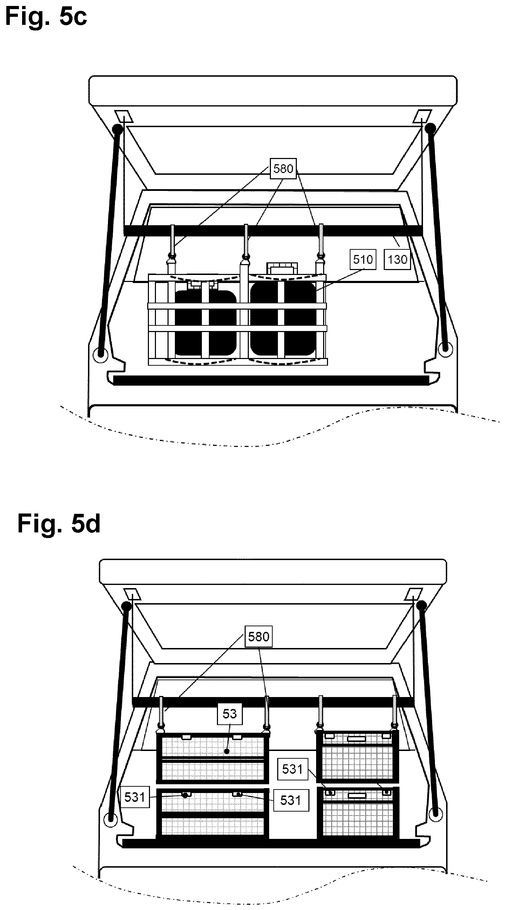

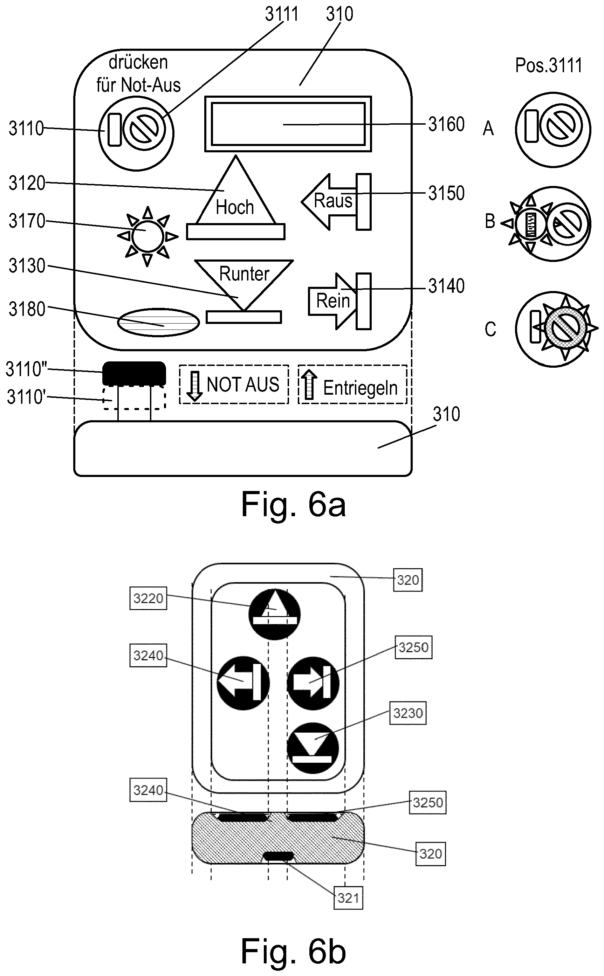

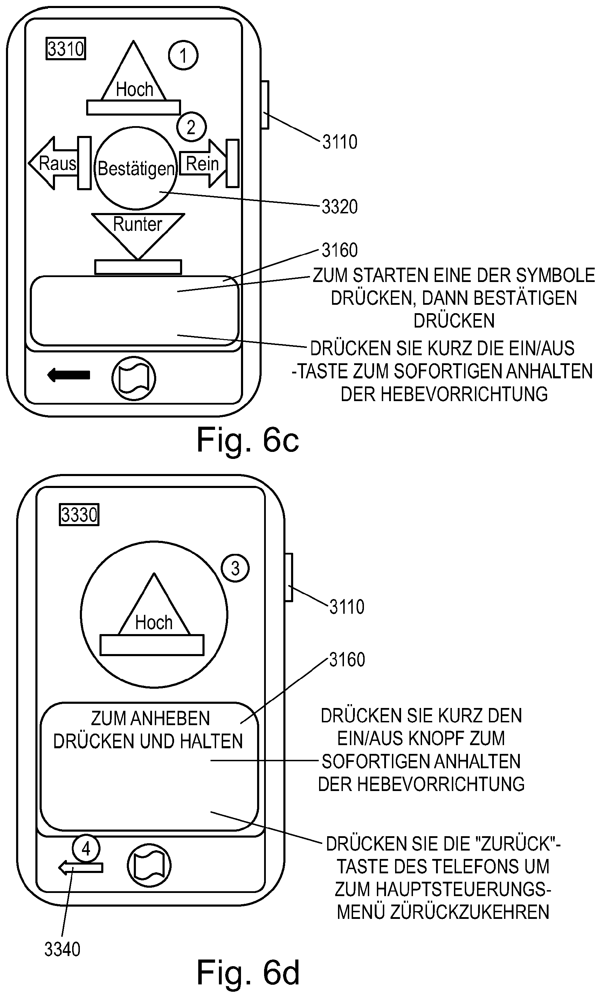

Nachfolgend soll das erfindungsgemäße Be- und Entladesystem für ein konventionelles Kraftfahrzeug, insbesondere Personenkraftfahrzeug im Detail beschrieben werden. Das Be- und Entladesystem besteht aus den folgenden, teils optionalen Sub-Komponenten:
1. Hebevorrichtung zum Heben und Senken einer Last (Figuren 2a-2e);
2. Ladeboden-Modul zur Aufnahme der Last und Transport der Last in und aus dem Laderaum (Figuren 3a-3e);
3. Bedienmodul(e) zur Realisierung der Schnittstelle zwischen Anwender und System (Figuren 6a-6c);
4. Lasthalter zur Aufhängung der Last an der Hebevorrichtung und zur sicheren Verankerung in dem Laderaum. Des Weiteren hat der Lasthalter die Funktion eines Lastcontainers, um die Nutzlast sicher zum/vom Fahrzeug transportieren zu können (Figuren 5a-5d);
5. Halterungsmodul mit Positionierelementen zum Halten und Stützen der Hebevorrichtung: Diese halten die Hebevorrichtung in Arbeitsposition und verteilen das Last-Gewicht auf die Fahrzeugkarosserie (Figuren 4a-4c)
6. System-Steuereinheit zur Steuerung alle Arbeitsvorgänge gemäß den Benutzereingaben und des Fahrzeugzustandes.
7. Zusatzbatterie, die zusätzliche Energie liefert, falls der Ladezustand der Fahrzeugbatterie nicht ausreicht.

Nachfolgend sollen die vorgenannten Subkomponenten im Detail beschrieben werden. Hauptbestandteil des Be- und Entladesystems ist eine Hebevorrichtung in Form eines elektromotorischen Zugseilsystems.

### Hebevorrichtung

Das Zugseilsystem besteht aus einem Elektromotor 120, einem Getriebe 110, einer Bremse 140, einer Lastkabel-Aufnahmerolle 150, Lastkabel-Führungsmodulen 180, einem Montagerahmen 160, einem Lastkabel 170 und einer Träger- bzw. Querstange 130 zur Lastaufnahme. Mittels der Hebevorrichtung können schwere Gepäckstücke 5 (Nutzlast) gehoben, gehalten und abgesenkt werden.

Mit Ausnahme der Querstange 130, die durch je ein Ende des Lastkabels 170 mit dem Zugseilsystem verbunden ist, sind die anderen Komponenten der Hebevorrichtung in der Heckklappe 7 des Kraftfahrzeuges eingebaut. Die Enden des Lastkabels 170, die mit der Querstange 130 verbunden sind, treten aus dem Inneren der Heckklappe 7 durch zwei Öffnungen, die links und rechts des unteren inneren Randes der Heckklappe 7 angebracht sind. Somit ist die Länge der Querstange 130 ungefähr gleich der Breite des Heckklappen-Interieurs (entspricht ungefähr der Breite des Laderaums).

Das Gepäckgut 5 (Nutzlast) kann an einer beliebigen Position auf der Querstange 130 aufgehängt werden, so dass ein wiederholter Beladungsvorgang durchlaufen werden kann, um mehrere schwere Gepäckstücke 5 unabhängig laden und auf der Ladefläche 220 positionieren zu können. Durch entsprechende Auslegung der Hebe-Steuerelektronik (inklusive Sensorik) können Lastgewicht, Überlast, Überhitzung des Lastantriebs detektiert und die Höhenkontrolle der Lasthantierung realisiert werden.

Die Querstange 130 (Lastträger) wird in einer Mulde 190 bzw. Vertiefung 1920 des Blend-Elementes der Heckklappe 7 arretiert, um mechanische Vibrationen während der Fahrt (wenn die Hebevorrichtung inaktiv ist) zu vermeiden. Die Befestigung der Querstange 130 in Parkposition kann z.B. rein mechanisch durch Einrastclips 1910 oder Federdrücker 1910 realisiert werden. Ein Sensor 1940 (z.B. Hall / Kontaktsensor) detektiert, ob sich die Querstange 130 in Parkposition befindet. In der Figur 2a ist die Querstange einmal in der Parkposition 130 und einmal in der abgelassenen Position 130' dargestellt. Das Gewicht der Querstange 130 muss so dimensioniert sein, dass eine ausreichende Spannung des Lastkabels 170 auch in lastlosen Zustand gegeben ist und somit jederzeit eine korrekte Lastkabelführung und -Wicklung gesichert ist. In geparkter Stellung sind die Lastkabel 170 nicht gespannt, so dass die Querstange 130 manuell aus der Mulde 190 gezogen werden kann.

Das Lastkabel 170 besteht aus zwei Kabelabschnitten 171, 172 gleicher Länge, die in entgegengesetzter Richtung auf der Aufnahmerolle 150 separat gewickelt sind, so dass, wenn sich die Kabel-Aufnahmerolle 150 in eine Richtung dreht, die zwei Kabelenden, je an einem Ende der Querstange 130 fixiert, sich gleichzeitig senken oder heben, abhängig von der Drehrichtung der Kabel-Aufnahmerolle 150.Die Aufnahmerolle 150 besteht somit aus zwei Spulen, auf diese die Kabelabschnitte 171, 172 in entgegengesetzter Richtung aufgewickelt werden.

Um das Lastkabel 170 richtig zu spannen und zu führen, ist an jeder Kabelaustrittsöffnung in der Heckklappe 7 je ein Kabelführungsmodul 180 angebracht. Das Kabelführungsmodul 180 sichert die korrekte Umlenkung des Kabels 170 über die Rollen 1820, 1830, so dass auch bei nicht horizontaler Lage des Kraftfahrzeugs, oder beim Balancieren der Last 5, das Lastkabel 170 nicht an der Heckklappe 7 reibt oder aus der Führung 180 springt. Die Rollen 1820, 1830 können auf Kugellagern in einem Halterahmen 1810 montiert sein.

Alle im Inneren der Heckklappe 7 befindlichen Komponenten wie Elektromotor 120, Getriebe 110, Bremse 140, Lastkabel-Aufnahmerolle 150, Führungsmodule 180 sind auf einem Montagerahmen 160 fixiert. Somit erfüllt der Montagerahmen 160 folgende Aufgaben.
1. Vereinfachung der End-Montage beim Fahrzeughersteller - vorausgesetzt entsprechender konstruktiver Auslegung der Heckklappe 7 - da die Teile schon außerhalb der Heckklappe 7 vormontiert und in Betrieb genommen werden können (z.B. beim Zulieferer)
2. Mechanische Verstärkung der Heckklappe 7, so dass die Risiken der Verformung der Heckklappe 7 unter Last minimiert werden.
3. Realisierung der Befestigungs-/Verankerungspunkte für die Halterungselemente, welche die mechanische Last von der Hebevorrichtung auf den Fahrzeugrahmen übertragen.

Die mechanische Last kann somit über die Verankerungselemente 6240 an die Positionshalter übertragen werden.

Der elektromotorische Antrieb der Hebevorrichtung besteht aus einer Kombination von Elektromotor 120 inkl. Spindel, Getriebe 110, Bremse 140, Kabel-Aufnahmerolle 150, Kontrollmodul 1230 und Fahrzeug-Kabelstrang Anschluss 1260. Die Elektronik und Reglersoftware des Kontrollmoduls 1230 sind so realisiert, dass bei einem Fehler der Elektronik bzw. Ausfall der Stromversorgung die Bremse 140 automatisch ausgelöst wird (z.B. Einsatz einer elektromagnetischen Bremse). Des Weiteren ist der elektromotorische Antrieb mit der notwendigen Sensorik 1210 ausgestattet, um folgende Arbeitsparameter zu erfassen:
1.Messung des Lastgewichts, inkl. Erfassung einer mechanischen Überlastung
2.Messung des Hubweges (Lastbewegung)
3.Erfassung einer Überhitzung des Motors und/oder Getriebes

Die Signale 1250 der Überlastsensoren 1210 werden durch die Modul-Prozesseinheit des Motormoduls (Abk. "MPE" 1230) empfangen und zu der Steuereinheit über den Anschlussbus (wie CAN / LIN) 1260 weitergeleitet. Des Weiteren, basierend auf den Kommandos, die die Modul-Prozesseinheit 1230 von der Steuereinheit empfängt, kontrolliert diese den Elektromotor 120 und die Elektromagnetische Bremse 140 (Signale 1240, 1250).

### Hebevorrichtung-Halterungsmodul

Die Bestandteile der Hebevorrichtung-Halterungsmoduls sind in den Figuren 4a bis 4c dargestellt. Ein nicht unwichtiger Bestandteil des Be- und Entladesystems kann darin liegen, dass wenigstens ein Halterungselement 60 zur mechanischen Positionierung und Stützung der Hebevorrichtung 10 und Heckklappe 7 realisiert wird. Grundsätzlich geht es um zwei Hebevorrichtung-Positionierungselemente 620, die jeweils links und rechts der Heckklappe 7 angeordnet sind. Die Aufgabe der Positionierungselemente 620 ist die Stützung der Hebevorrichtung 10 und Heckklappe 7 und die Übertragung der mechanischen Last 5 auf den Fahrzeugrahmen 4. Diese Funktion wird erfüllt, indem ein Ende jedes Positionierungselementes 620 an dem Montagerahmen 160 der Hebevorrichtung 10 angebracht ist - bezeichnet als Hebevorrichtung-Verankerung 6240 - und das andere Ende an dem Fahrzeugrahmen 4 (Kofferraum-Rahmen) - bezeichnet als Fahrzeugrahmenverankerung 6250. So wird erreicht, dass die Heckklappe 7 während der Lastmanipulation in Position gehalten wird und sich nicht unbeabsichtigt bewegt.

Jedes Positionierungselement 620 des Halterungsmoduls besteht aus einem Positionierungsgestell 6220 mit den Segmenten 6221, 6222 und einem optionalen Positionierungsgestellaktuator/Positionsgeber 6230 samt Fahrzeug-Kabelstrang Anschluss. Um das Öffnen der Heckklappe 7 auch bei Versagen der Bordelektrik/Elektronik zu ermöglichen, wird die Heckklappe 7 in Richtung "Öffnen" von einer mechanischen Feder - z.B. einer Gasfeder 630 getrieben (also die Öffnung der Heckklappe 7 wird auch "rein passiv" durch die Gasfeder 630 ermöglicht - wie das Öffnen einer "klassischen Heckklappe"). Die Federkraft muss so dimensioniert sein, dass das erhöhte Gewicht der Heckklappe 7 aufgrund der eingebauten Hebevorrichtung 10 kompensiert wird. Nachdem die Heckklappe 7 entriegelt ist, sorgt die Gasfeder 630 dafür, dass die Heckklappe 7 teils geöffnet wird. Danach startet der Motor 6230, um mit Hilfe der zwei Segmente des Positionierungsgestells 6221, 6222 die Heckklappe in Endposition zu bringen.

Jedes Positionierungsgestell 6220 wird durch mechanische Kodierung - bezeichnet als Terminierungselement des Positionierungsgestells 6220 - so realisiert, dass ein "Überschreiten" der Arbeitsposition nicht möglich ist und das Erreichen der Arbeitsposition vom Anwender sowohl optisch als auch haptisch und vom Positionsgeber 6230 elektrisch erkannt werden kann. Das Terminierungselement erfüllt also eine "poka-yoke" Funktion. Die Positionierungselemente 620 des Halterungsmoduls werden bei geparkter Position (Heckklappe 7 geschlossen) in die Karosserie 4 versenkt und werden für die Arbeitsposition entweder manuell oder elektrisch aus ihrer Parkposition ausgefahren. Bei dem Einsatz eines elektrischen/hydraulischen Positionsgebers (Positionierungsgestell - Aktuators 6230) wird damit auch eine automatisierte Öffnung / Schließung der Heckklappe 7 ermöglicht.

Der optionale motorische Antrieb (Positionierungsgestell-Aktuator 6230), welcher durch aktuell auf dem Markt verfügbare hydraulische/elektrische Lösungen realisiert werden kann, muss in Schließrichtung der Heckklappe 7 aktiv sein, wobei auch eine manuelle Schließung der Heckklappe 7 möglich sein muss (z.B. bei Ausfall der Elektrik/Elektronik). Bei Erreichen der Arbeitsposition der Heckklappe 7 bzw. der Hebevorrichtung 10 wird jedes Positionierungselement 620 manuell, vom Anwender, mit Hilfe eines Fixierungselementes 610 verriegelt, um die Arbeitsposition der Hebevorrichtung 10 abzusichern. Die korrekte Einrast-Stelle des Fixierungselementes 610 muss dem Anwender eindeutig auf dem Positionierungselement 620 kenntlich gemacht werden, z.B. durch farbige Markierungen oder durch Beschriftung. Optional kann ein Sensor-Paar 640, 641 - genannt Fixierungssensoren - in jedem Fixierungselement 610 eingesetzt werden, siehe die Ausführung gemäß Figur 4c. Somit kann die Position des Fixierungselementes 610 bezüglich der korrekten Stellung des Positionierungsgestells 6220 elektronisch detektiert werden und der Betrieb der Hebevorrichtung 10 wird nur bei korrekten Stellung des Fixierungselementes 610 freigegeben. Durch Hilfe des Sensors 641 kann nun so detektiert werden, ob sich das Fixierungselement 610 in Freigabeposition befindet (das jeweilige Positionierungsgestell 6220 kann in die Parkposition fahren und die Heckklappe 7 kann geschlossen werden). Mit dem Sensor 640 kann detektiert werden, ob sich das Fixierungselement 610 in Arbeitsposition befindet (ob das jeweilige Positionierungsgestell 6220 die Hebevorrichtung 10 und damit die Heckklappe 7 während der Arbeit korrekt stützen kann). Die Sensoren 640, 641 werden in dem Positionierungsgestell 6220 eingebaut. Diese können z.B. als Hall-Sensoren realisiert werden, die auf die Proximität des Fixierungselementes 610 reagieren.

Eine andere Möglichkeit für die Realisierung des Positionierungsgestells 6220 ist die Benutzung von zwei einfachen "Stützstangen" (siehe Figur 4a), die in geparkter Position entweder in der Heckklappe 7 oder in den Kofferraumboden versenkt werden und dann manuell in die korrekte Position gebracht und mit dem Fixierungselement 610 gesichert werden. In diesem Fall muss die Heckklappe 7 manuell oder ggf. über einen externen motorischen Aktuator (marktübliche Lösung) geöffnet/geschlossen werden.

### Ladebodenmodul

Die Bestandteile des Ladebodenmoduls 20 sind in den Darstellungen der Figuren 3a bis 3e dargestellt. Mittels des Ladebodenmoduls wird eine aus- und einfahrbare mobile Ladeplatte 220 bereitgestellt, die mit der Hebevorrichtung 10 synchronisiert - im Falle einer vollmotorisierten Lösung - arbeiten kann, um das von der Hebevorrichtung 10 gehobenes Gepäckstück 5 aufzunehmen und in den Gepäckraum zu transportieren und bei der Entladung analog unterstützt. Die mobile Ladeplatte 220 und die weiteren dazu notwendigen technischen Elemente bilden das genannte Ladebodenmodul 20. Das Ladebodenmodul 20 kann als Option in den Gepäckraum montiert werden und besteht aus den folgenden Elementen:
1. Zwei Führungsmodule 210 - je ein Führungsmodul auf jeder Seite nahe der Ladekante, um die mobile Ladeplatte 220 in ausgefahrener Position zu führen, zu halten und in den Laderaum zurück zu führen.
2. Mobile Ladeplatte 220: transportiert die Nutzlast in- und aus dem Laderaum.
3. (Festes) Bodengestell 230 - mit Tragerollen 2310 für die gleichmäßige Verteilung der Ladeplatten-Last auf das Bodengestell 230 und dadurch Übertragung des Last-Gewichtes auf die Fahrzeugkarosserie 4.
4. Verriegelungselement(e) 250 für die Arretierung und Absicherung der mobilen Ladeplatte 220 in eingefahrener Position. Somit werden die Fliehkräfte, verursacht durch die Lademasse (mobile Ladeplatte 220 und Nutzlast 5), bei Beschleunigung und Abbremsen des Fahrzeuges, auf die Karosserie 4 übertragen.
5. Optional kann bei dem Bodengestell 230 ein Führungsantrieb 240 der Ladeplatte 220 samt Fahrzeug-Kabelstrang Anschluss angebracht werden.
6. Optional kann das Erreichen der Höchstlast (bezogen auf die Tragfähigkeit der Ladeplatte 220 und des gesamten Ladebodenmoduls 20 durch eine in dem Bodengestell 230 integrierte elektronische Waage 280 detektiert werden.
7. Basisrahmen 290 für die Montage des Ladebodenmoduls 20 in dem Kofferraum-Boden.

Das Ladebodenmodul 20 wird so realisiert, dass die mobile Ladeplatte 220 bei Ein- und Ausfahren stets ohne Gefahr einer Einklemmung geführt wird. Damit wird vermieden, dass die mobile Ladeplatte 220 sich verkeilt, schief sitzt oder "herausfällt". Auf jeder Seite der mobilen Ladeplatte 220 (bezogen auf die Längsachse des Fahrzeuges - Achse "x") wird ein Führungsmodul 210 an der Fahrzeugkarosserie/Fahrzeugrahmen 4 befestigt. Die Hauptfunktion der zwei Führungsmodule 210 ist die Bewegungsmöglichkeit der mobilen Ladeplatte 220 ausschließlich auf die x-Achse zu beschränken. Das wird erreicht, indem jedes Führungsmodul mit Führungsrollen 2120 und 2130 ausgestattet wird.

Die Begrenzung der Bewegungsmöglichkeit der mobilen Ladeplatte 220 in z-Achse (vertikal) wird durch die oberen Führungsrollen 2120 realisiert, die mit der Oberseite der mobilen Ladeplatte 220 Kontakt haben und so in ausgefahrener Position der mobilen Ladeplatte 220 ein Teil des das Gesamtgewicht der mobilen Ladeplatte 220 samt Last 4 auf die Karosserie 4 übertragen. Die oberen Führungsrollen 2120 drücken die mobile Ladeplatte 220 auf die Basisplatte 230 und damit auch auf den elektromotorischen Antrieb 240 und auf die Tragerollen 2310.

Die Begrenzung der Bewegungsmöglichkeit der mobilen Ladeplatte in y-Achse (horizontal - seitlich) wird durch Seiten-Führungsrollen 2130 realisiert, die mit der lateralen Seite der mobilen Ladeplatte 220 Kontakt haben. Somit sind zwei Seiten-Führungsrollen 2130 pro Führungsmodul 210 ausreichend, um die Bewegung der mobilen Ladeplatte 220 in Richtung der y-Achse zu unterdrücken.

Die Bewegung der oberen Führungsrollen 2120 wird über Drehsensoren 2140 von dem Steuermodul überwacht, um so eine unerwartete Blockierung der mobilen Ladeplatte 220 detektierbar zu machen. Zusätzlich sorgen Ausfahr-Begrenzer 2220, die auf der mobilen Ladeplatte 220 montiert sind, für die mechanische Absicherung der Platte 220 in "herausgezogener" Position. Damit wird gesichert, dass auch bei Versagen des Führungsantriebs 240 die Platte 220 nicht "aus dem Fahrzeug fällt". Die Lastverteilungselemente 2340, 2350 können noch Kraftsensoren 280 integriert haben, um das Gesamtgewicht der Nutzlast 5 messbar zu machen. An dem Bodengestell ist auch der motorisierte Führungsantrieb 2410 angebracht, der die mobile Ladeplatte 220 über ein Lineargetriebe 2420 (z. Bsp. Zahnriemenachsen) bewegt. Der Führungsantrieb 2410 verfügt über eine Sensorik 2440, 2430, um eine Ansammlung von Wasser in dem Laderaum oder Überlast des Führungsantriebs 2410 zu detektieren. Die Übertragung der von einem Elektromotor 2410 erzeugten Kraft auf die mobile Ladeplatte 220 kann auch mittels einer speziell dafür profilierten Gummirolle 2420 - bei Auslegung des Systems für geringere Gesamtlast-, oder durch ein Zugseilsystem für höhere Lastkapazitäten realisiert werden. Unabhängig von der Auslegung des elektromotorischen Antriebs 240, soll dieser auch eine rein manuelle Manipulation der mobilen Basisplatte 220 ermöglichen. Dies kann z.B. durch eine elektromagnetische Kupplung, die zwischen dem Elektromotor 240 und der Antriebsrolle 2420 oder Zugseil sitzt, erfolgen. Durch den Fahrzeug-Kabelstrang Anschluss wird der elektromotorische Antrieb 240 mit der Steuereinheit des Be- und Entladesystems über den Fahrzeug-Kabelstrang verbunden.

Die Materialeigenschaften der mobilen Ladeplatte 220 müssen sicherstellen, dass bei komplett ausgefahrener Position die Ladeplatte 220 unter voller Beladung nicht bricht. Das kann z.B. durch den Einsatz von Verbundmaterialien (Carbonfaser) realisiert werden. Durch die Möglichkeit der Hebevorrichtung 10 das Lastgewicht zu messen, kann auch bei mehreren Last-Stücken 5 das Gesamtgewicht ungefähr berechnet werden, und bei Überschreitung des zugelassenen Höchstgewichts der Anwender gewarnt werden. Die Oberseite der mobilen Ladeplatte 220 muss rutschhemmend durch den Einsatz von entsprechenden Gummiprofilen ausgelegt werden. Sinnvollerwiese umfasst die Ladeplatte 220 optional zumindest abschnittsweise Randabsicherungsprofile, die vermeiden, dass die Nutzlast seitlich von der Ladeplatte abrutscht und so das Herausfahren der Ladeplatte erschweren.

Während des Fahrtbetriebs, wo die mobile Ladeplatte 220 samt Nutzlast 4 in dem Kofferraum eingefahren ist ("Transportposition"), muss die mobile Ladeplatte 220 ausreichend abgesichert sein, so dass auch bei höheren Beschleunigungen (richtungsunabhängig), aber insbesondere in der x-Richtung (Fahrtrichtung), die mobile Ladeplatte 220 in stabiler Position bleibt und die Führungselemente nicht beschädigt. Dafür werden in der mobilen Ladeplatte 220 sowohl hinten als auch vorne (bezogen auf die Fahrtrichtung) Positionierungseinkerbungen 2210 eingefräst. Die zwei vorderen (in Fahrtrichtung gesehen) Positionierungseinkerbungen 2210 dienen zur Positionierung der mobilen Ladeplatte 220 durch Einrasten in Positionierungskeilen 291 des Basisrahmens 290. Die hinteren Positionierungseinkerbungen 2211 erlauben die Blockierung der mobilen Ladeplatte mittels Verriegelungsbolzen 250. Die Kontaktstellen zwischen dem Basisrahmen 290 und die mobile Ladeplatte 220 müssen vibrationsdämpfende Eigenschaften haben (z. Bsp. realisierbar aus Gummi/ Silikon Profilen)

### Bedienkonzept und Bedienmodul(e)

Für das Be- und Entladesystem kann ein einheitliches Bedienkonzept, das aus Steuer- und Informationselementen besteht, durch mehrere Bedienmodule realisiert sein. Das Bedienkonzept beinhaltet folgende Steuer- und Informationselemente (diese werden in den folgenden Absätzen näher erläutert):
1. Visuelle Information: "System-defekt" - z. Bsp. rote Lampe, dauernd leuchtend
2. Visuelle Information: "Überlast" - z. Bsp. rote Lampe, blinkend
3. Visuelle Information: "System aktiv" (unter Normallast oder in Bewegung) - z. Bsp. gelbe Lampe, blinkend
4. Visuelle Information: "System in Initialisierung" - z. Bsp. grüne Lampe, blinkend
5. Visuelle Information: "System bereit, inaktiv" - z. Bsp. grüne Lampe, dauernd leuchtend
6. Akustische Warnung: "System in Bewegung" (z. Bsp. ein Buzzer, der aktiv ist während die Last 5 bewegt wird)
7. Steuerelemente "Runter", "Rauf", "Ausfahren", "Einfahren"
8. Steuerelement "System aktivieren/deaktivieren / Not-Aus".
9. Optional, eine Textanzeige für Vereinfachung der Bedienung und Darstellung zusätzlicher Betriebs-Informationen

Das aus dem beschriebenen Bedienkonzept resultierende Typ des Bedien-Moduls kann auf verschiedene Arten realisiert werden , so bspw. als am Fahrzeug, insbesondere der Heckklappe 7, befestigtes Bedienfeld 310 (siehe Figur 6a), als Fernbedienung 320 (siehe Figur 6b) oder als Applet 330 für mobile Gerät wie Smartphone, Smartwatch (siehe Figur 6c), wie weiter in diesem Kapitel gezeigt wird.

Das Bedienfeld 310 ist seitlich an der Heckklappe 7 so positioniert, so dass in Arbeitsposition der integrierten Hebevorrichtung 10 ein Kind die Steuerknöpfe des Bedienfeldes 310 nicht erreichen kann. Des Weiteren wird die Steuerelektronik so realisiert, dass die Kommandos erst dann aktiviert werden können, wenn die Heccklappe geöffnet und in Arbeitsposition gebracht ist und das Fahrzeug im Stand abgesichert ist (z. Bsp. Handbremse gezogen, Schalthebel in Position "P"). Anmerkung: die automatische Anbringung der Heckklappe 7 in der Arbeitsposition und Schließposition ist mit dem Bedienungskonzept realisierbar (Öffnen der Klappe über Heckklappenschalter, Fahrzeugschlüssel-Fernbedienung, Taster an der Heccklappe-Innenseite).

Das Bedienfeld 310 hat als Bestandteil einen Ein/Aus Knopf 3110. Der Ein/Aus Knopf 3110 hat zwei Positionen: in der "gedrückten" Position 3110" ist das Be- und Entladesystem "gesperrt, inaktiv": alle motorischen Aktuatoren sind inaktiv, verfügbare Bremselemente sind aktiv (z. Bsp. die Bremse 140 der Hebevorrichtung 10). Wenn der Ein/Aus Knopf 3110 in gedrückter Position ist, werden weitere Kommandos für den Betrieb des Be- und Entladesystems (mit Ausnahme des Kommandos "System entsperren") ignoriert. In der "herausgezogener Position" 3110' des Ein/Aus Knopfes ist das Be- und Entladesystem "entsperrt" und kann weitere Kommandos akzeptieren.

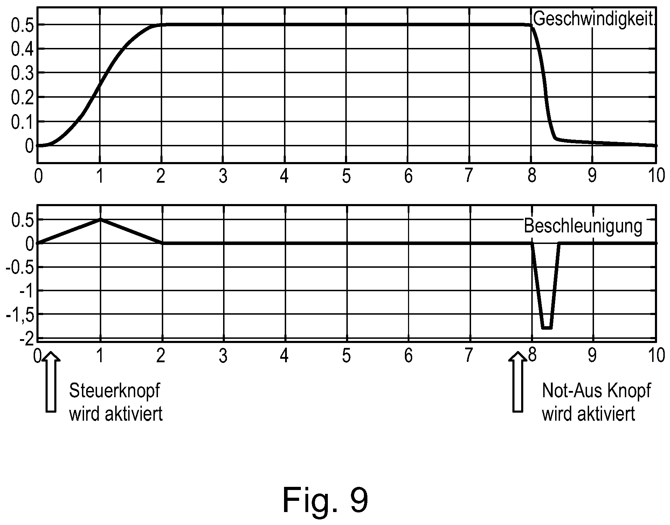

Dem Ein/Aus Knopf 3110 ist eine Statusanzeige 3111 zugeordnet, die einerseits die Verfügbarkeit der "Not-Aus" Funktion dauernd anzeigt (z. Bsp. gedimmtes dauernd-leuchtendes Not-Aus Symbol und beleuchteter "Not-Aus Hinweistext" 3111.A), und andererseits den Freigabestatus des Be- und Entladesystems anzeigt, z. Bsp. Grün bei entsperrtem System 3111.B oder intensiv-Rot bei gesperrtem System 3111.C. Durch drücken des Ein/Aus Knopfes 3110 während die Querstange 130 oder die Ladeplatte 220 in Bewegung sind, wird der jeweilige Antrieb durch die Aktivierung der Bremse zu einem raschen Stillstand gebracht. Das Not-Aus Bremsprofil ist in Figur 9 informativ dargestellt.

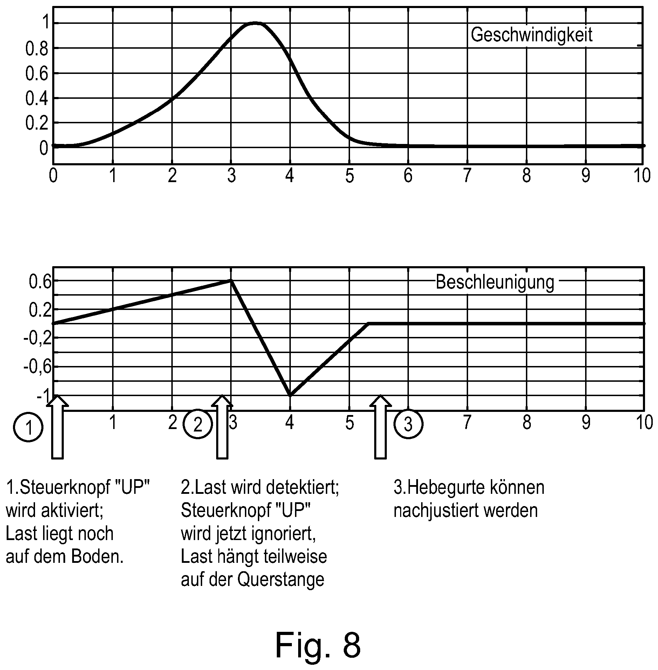

Das Bedienfeld 310 hat als Bestandteil zwei Steuerknöpfe für das Heben/Senken der Last 5 durch die Hebevorrichtung 10. Die Hebevorrichtung 10 wird über die Knöpfe "UP" 3120, "DOWN" 3130 gesteuert. Wenn keiner der Knöpfe gedrückt wird, hält die Hebevorrichtung 10 die Querstange 130 samt Last 5 in der momentan-erreichten Position (mittels der Hebevorrichtungs-Bremse 140). So lange der Knopf "UP" 3120 gedrückt wird, hebt die Hebevorrichtung 10 die Querstange 130 und die gegebenenfalls angehängte Last 5. Beim Erreichen einer vordefinierten "Limit-Top Position" bleibt die Querstange 130 auch beim weiteren Drücken des Knopfes "UP" 3120 in dieser Position stehen. Das Beschleunigungs- und Geschwindigkeitsprofil in vertikaler Richtung (Querstange 130 unter Last) sind in Figur 8 informativ dargestellt.

Die Hebevorrichtung 10 kann detektieren, wenn die Querstange 130 nicht unter Last steht (z. Bsp. durch Messung des Motor-Laststroms des Motors 140). Nach der Befestigung der Last 5 an der Querstange 130 (z. Bsp. durch Hebe-Gurte), muss die Hebevorrichtung 10 erst die Querstange 130 relativ rasch heben, solange die Last 5 nicht "hängt" und die Gurte nicht gespannt sind. Um die Hebe-Gurte richtig spannen zu können (und damit eine richtige Hängeposition der Last 5 abzusichern) muss die Hebevorrichtung 10, bevor die Last 5 vollständig an der Querstange 130 hängt, die Bewegung der Querstange 130 stoppen, damit Nachjustierungen der Hebe-Gurte zu ermöglichen. Das Beschleunigungs- und Geschwindigkeitsprofil für diesen Anwendungsfall ist in Fig. 8 informativ dargestellt.

So lange der Knopf "DOWN" 3130 gedrückt wird, senkt die Hebevorrichtung 10 die Querstange 130 und die gegebenenfalls angehängte Last 5. Beim Erreichen einer vordefinierten "Limit-Bottom Position" bleibt die Querstange 130 in dieser Position auch beim weiteren Drücken des Knopfes "DOWN" 3130. Das Bedienfeld 310 hat als Bestandteil zwei Steuerknöpfe für das Ein- und Ausfahren der Last 5 in- und aus dem Kofferraum durch das Ladeboden-Modul 20. Die mobile Ladeplatte 320 wird über die Knöpfe "IN" 3140, "OUT" 3150 gesteuert. Wenn keiner der Knöpfe 3140, 3150 gedrückt wird, hält der Antrieb 240 der mobilen Ladeplatte 220 (mittels der Antriebs-Bremse) die mobile Ladeplatte 220 samt Last 5 in der momentan erreichten Position. So lange der Knopf "OUT" 3150 gedrückt wird, wird die mobile Ladeplatte 220 samt Last 5 aus dem Laderaum 130 gefahren. Beim Erreichen der "Limit-Out Position" bleibt die mobile Ladeplatte in dieser Position auch beim weiteren Drücken des Knopfes "Out" 3150. So lange der Knopf "IN" 3140 gedrückt wird, wird die mobile Ladeplatte 220 samt Last 5 in den Laderaum 130 gefahren. Beim Erreichen einer "Limit-In Position" bleibt die mobile Ladeplatte 220 in dieser Position auch beim weiteren Drücken des Knopfes "IN" 3140.

Die Steuerprofile der Kräfte, die an der Querstange 130 durch den Antrieb 120 der Hebevorrichtung 10 und an der mobilen Ladeplatte 220 durch den Antrieb 2320 der mobilen Ladeplatte 220 appliziert werden, müssen so ausgelegt sein, dass keine ruckartige Bewegung der Last verursacht wird. Solche Steuerprofile sind z. Bsp. aus der Robotik bekannt.

Die Steuerelemente sind visuell so gekennzeichnet, dass durch die verschiedenen Stellungen der Heckklappe 7 ein Vertauschen der Steuerungs-Funktionen erschwert ist. Die Steuerelemente sind beleuchtet, wenn das System aktiv ist, um die Bedienung auch bei Dunkelheit zu ermöglichen. Das Bedienfeld 310 hat als Bestandteil eine Lichtanzeige 3170 für die Signalisierung des aktuellen Systemstatus, so dass der Anwender einen schnellen Überblick bekommt. Die Lichtanzeige hat drei Farben, derer Bedeutung bereits vorstehend definiert wurde. Das Bedienfeld 310 hat als Bestandteil einen Summer/Buzzer 3180 für die auditive Warnung, wenn die Hebevorrichtung 10 oder die mobile Ladeplatte 220 in Bewegung sind (z. Bsp. intermittierendes Piepen). Des Weiteren kann der Buzzer aktiv sein, wenn die Heckklappe 7 öffnet oder schließt. Das Bedienfeld 310 hat als Bestandteil eine Textanzeige/Text-Display 3160. Damit kann z. Bsp. das Gewicht der auf der Querstange 130 angehängten Last 5 oder das Gesamtgewicht aller auf der mobilen Ladeplatte 220 befindlichen Laststücke 5 angezeigt werden. Des Weiteren können allgemeine Infos (Fehlerstatus, Wartungshinweise) angezeigt werden. Die Textanzeige ist optional, da die Informationen auch auf andere Informationsanzeigegeräte (z. Bsp. Bordcomputer) angezeigt werden können.

Eine weitere Ausprägung des Bedienkonzeptes, wie vorstehend aufgezeigt, kann durch eine optionale Fernbedienung 320 (Fig. 6b) verwirklicht sein. Während die Kontrolle des Systems über das Bedienfeld 310 die unmittelbare Nähe des Anwenders an dem Bedienfeld 310 erfordert, kann über die Fernbedienung 320 die Kontrolle flexibler ausgeübt werden (z. Bsp. um sperrige-Laststücke 5 gegebenenfalls noch manuell zu orientieren. Die Fernbedienung 320 kann Teil des Fahrzeugschlüssels oder ein separates Modul sein (z. Bsp. Schlüsselanhänger / "Key-Fob"). Die Fernbedienung 320 verfügt nur über die Steuerknöpfe "UP" 3220, "DOWN" 3230, "IN" 3240, "OUT" 3250. Die anderen Anzeigeelemente, die als Teile des Bedienfeldes 310 beschrieben wurden (Ein/Aus Knopf 3110; Lichtanzeige 3170; Summer 3180; Textdisplay 3160) werden nur in dem Bedienfeld 310 integriert. Die Anordnung der Steuerknöpfe 3220, 3230, 3240, 3250 auf der Fernbedienung 320 ist so, dass die Funktionalität jedes Knopfes haptisch erkannt werden kann. Beispiele werden in dem Realisierungsteil dieses Dokumentes beschrieben.

Die Steuerknöpfe können Kommandos an die Steuerung des Systems schicken, wenn das Fahrzeug entriegelt ist und sich die Heckklappe 7 in Arbeitsposition befindet, sonst sind diese Steuerknöpfe ohne Funktion. Anmerkung: die Heckklappe 7 befindet sich in Arbeitsposition, wenn die Querstange 130 nicht in ihrer Parkposition ist und das Halterungsmodul der Hebevorrichtung 10 im Sinne des Betriebskonzepts fixiert ist. Falls eine Fernbedienung 320 für die Steuerung des Systems verwendet wird, können die Steuerknöpfe 3120, 3130, 3140, 3150 auch für die Lastbewegung auf dem Bedienfeld entfallen. Auch bei dem Einsatz einer Fernbedienung 320 oder einer Steuerungsapplikation (S. Figur 6c) muss das Bedienfeld 310 am Fahrzeug folgende Elemente beinhalten: Ein/Aus Knopf 3110, Lichtanzeige 3170, Summer 3180. Bei Ausfall der Fernbedienung 320 oder der Steuerungsapplikation kann der Ein/Aus Knopf für das "Parken" der Hebevorrichtung 10 benutzt werden. Falls die Fernbedienung 320 in dem Fahrzeugschlüssel integriert ist, kann der Fahrzeug-Sperrknopf (der Fernbedienung) als Not-Aus Knopf benutzt werden.

Eine weitere Ausprägung des Bedienkonzeptes ist eine optionale "Steuerungsapp" 330 (gemäß Figur 6c), integriert in ein mobiles Gerät wie Mobiltelefon, Tablet, Smart-Watch und dergleichen. Das mobile Gerät kann über Bluetooth oder WiFi mit dem Fahrzeugmanagement (z. Bsp. Fahrzeug-Gateway oder Body-Controller Steuergerät) kommunizieren. In diesem Fall kommuniziert die Steuerungsapp 330 mit dem Body Controller und dieser leitet die Kommandos und Statusinfos an die Steuerung des Be- und Entladesystems weiter (Body Controller als Relay-Funktion). Falls das Fahrzeugmanagement Steuergerät - z. Bsp. Body Controller - keine Funkkommunikation mit anderen Geräte unterstützt, dann kann die Kommunikation mit der Steuerungsapp direkt von der Steuerung des Be- und Entladesystems realisiert werden.

Jede Art der Funk-Steuerung (über Fernbedienung 320 oder über Steuerungsapp 330) muss über übliche Verschlüsselungsprotokolle laufen (z. Bsp. Bluetooth Authentication-Authorisation and Encryption). Die Steuerungsapp 330 ist derart realisiert, dass die Funktionen des Be- und Entladesystems aus einem Hauptfenster 3310 gestartet werden können. Das Hauptfenster besteht aus der graphischen Darstellung der Steuerknöpfe 3120, 3130, 3140, 3150 für Last-Bewegung, einen Auswahl-Bestätigungs-Knopf 3320 und die Informationsanzeige 3160. Durch die Einführung des Bestätigungsknopfes wird gesichert, dass eine ungewollte Funktionsaktivierung des Be- und Entladesystems nicht erfolgen kann. Nur die Sequenz "Steuerungselement / Bestätigungselement" darf zur Funktionsfreigabe führen. Durch die Funktionsfreigabe eines Steuerungselements in dem Hauptfenster, wie in dem vorigen Paragraph beschrieben, gelangt man in dem Funktionsfenster 3330, wo nur ein Steuerungselement (entsprechend der freigegebener Funktion) verfügbar ist. Durch Drücken auf das graphische Symbol des Steuerelementes wird die entsprechende Lastbewegungsfunktion aktiviert. Über die Funktion "Zurück" 3340, die in allen mobilen Geräten verfügbar ist, gelangt man von dem Funktionsfenster 3340 in das Hauptfenster 3310. Die "Not-Aus" Funktion 3110 kann durch die Nutzung des "Aus" Knopfes, (der ebenfalls in allen mobilen Geräten verfügbar ist), realisiert werden. Eine kurze Betätigung des "Aus" Knopfes" versetzt das Be- und Entladesystem in sofortigen halt.

### Lastträger

Ein weiterer wichtiger und vorteilhafter Aspekt der Vorrichtung liegt mithin darin, dass speziell konzipierte Lastträger 50 (siehe Figuren 5a-5d) eingesetzt werden, um mit der Nutzlast 5 beim Heben/Senken und Befestigen in dem Laderaum sicher hantieren zu können. Der Lastträger 50 kann entweder netzartig (Lastnetz) oder kastenartig (Lastkasten) realisiert werden.

Last-Netz: Das Lastnetz kann die volle Breite des Laderaums ("Vollbreite-Netz") oder z. Bsp. nur die halbe Breite des Laderaums ("Halbbreite-Netz") haben. Damit können verschiedene Anwendungsfälle abgedeckt werden. Größere Säcke, wie in Gartencentern verkauft, werden mit einem Vollbreite-Netz, kleinere Säcke (z. Bsp. Zementsäcke) oder Getränkekästen mit einem Halbbreite-Netz, gehandhabt.

Verstärkungsbänder: Das Lastnetz besteht aus einem flachen Netz 510, das mit perpendikular-angeordneten Verstärkungsbändern (tragende Verstärkungsbänder 520) und stabilisierenden Verstärkungsbändern 530 versehen ist. Die tragenden Verstärkungsbänder 521 haben die Rolle, das Lastnetz an der Querstange 130 der Hebevorrichtung 10 aufhängen zu können. Die stabilisierenden Verstärkungsbänder 530 dienen nur der Absicherung der Positionsstabilität der tragenden Verstärkungsbänder 520. Das Lastnetz wird an der Hebe-Querstange 130 mittels Gurte 580 und Anker 590 (Karabiner), die an den Hängeschlaufen 540 befestigt sind, aufgehängt. Die tragenden und die stabilisierenden Verstärkungsbänder 520, 530 sind an deren Kreuzungsstellen 560 zusammengenäht oder genietet.

Hängeschlaufen: Das Hängen des Last-Netzes (samt Nutzlast 5) an der Querstange 130 der Hebevorrichtung 10 wird ermöglicht, indem an den Enden der tragenden Verstärkungsbänder 520 Hängeschlaufen 540 realisiert werden. Des Weiteren, an einigen Stellen, wo sich die tragenden Verstärkungsbänder 520 und die stabilisierenden Verstärkungsbänder 530 kreuzen, werden Zwischen-Hängeschlaufen 550 angebracht, um eine optimale Aufhängung der Nutzlast 5 zu ermöglichen.

Sicherungs-Schlaufen: Die stabilisierenden Verstärkungsbänder 530 haben an deren Enden auch Schlaufen 533, um das Lastnetz seitlich anhand von verstellbaren Sicherungsgurten 570 binden zu können.

Lastkasten: anstatt des Lastnetzes, das nicht formstabil ist, und so eher für Kastenware/Sackware verwendbar ist, kann auch eine speziell zu diesem Zweck konzipierte Klappbox 53 (s. Figur 5d) benutzt werden. Die Klappbox 53 hat Hängeschlaufen oder Ösen 531 an ihrer Lang- und/oder Querseite, um an der Querstange 130 mittels Hängegurte und Karabiner in Längsposition oder Querposition aufgehängt zu werden. Der Lastkasten soll stapelbar sein, um mehrere, solche vollbeladene Kästen tragen zu können.

### System Steuereinheit

Das Be- und Entladesystem umfasst eine modulare Steuereinheit, die alle Funktionen des Be- und Entladesystems steuert. Die Steuereinheit kann physikalisch als Teil eines Mehrfunktionen-Steuergerätes (z. Bsp. Body-Control-Module), oder als separates Steuergerät realisiert werden. In den nächsten Paragraphen werden nur die für die spezifischen Steuerfunktionen beschrieben. Aus funktionaler Sicht, besteht die Steuereinheit aus mehreren Funktionsblöcke:
1. Betriebsmodi steuern (engl. Control operation mode; abbrev. LF_OpMdCtrl)
2. Hebevorrichtung 10 steuern (engl. Control lifter module; abbrev. LF_LftMdlCtrl)
3. Ladebodenmodul 20 steuern (engl. Control load carrier; abbrev. LF_LdrCrrCtrl)
4. Halterungsmodul 60 steuern (engl. Control lifter supporting module; abbrev. LF_SprtMdlCtrl)
5. Aktuatoren steuern (engl. Control actuators; abbrev. LF_ActCtrl)
6. Funktionen des Be- und Entladesystems überwachen und Not-Reaktion einleiten (engl. Safety Monitor of the integrated load handling system; abbrev. LF_IntLdhMon)
7. Bedienmodule steuern (engl. Control user modules; abbrev. LF_UsrMdlCtrl)
8. Fahrzeugkommunikation (engl. Vehicle communication; abbrev. LF_VehComm)
9. Falls eine Zusatzbatterie verwendet wird: Kontrolle der Zusatzbatterie (Batterie laden, wenn der Motor läuft / Umschalten zwischen Hauptbatterie und Zusatzbatterie, wenn das Be- und Entladesystem in Betrieb ist).

Funktion "Betriebsmodi steuern" LF_OpMdCtrl: diese Funktion steuert alle anderen Funktionen des Be- und Entladesystems basierend auf:
1. aktueller Zustand der Bestandteile des Be- und Entladesystems (Zustand wird über die Überwachungsfunktion LF_IntLdhMon ermittelt),
2. Fahrzeugzustand (Zustand wird über die Fahrzeugkommunikation LF_VehComm ermittelt),
3. aktivierter Befehl vom Anwender (Befehl wird über die Bedienmodulsteuerung LF_UsrMdlCtrl ermittelt).

Des Weiteren, schickt die Funktion "Betriebsmodi steuern" (LF_OpMdCtrl) über die Funktion "Bedienmodule steuern" (LF_UsrMdlCtrl) Informationen bez. des Betriebszustands des Be- und Entladesystems an dem Anwender. Des Weiteren schickt die Funktion "Betriebsmodi steuern" (LF_OpMdCtrl) über die Funktion "Fahrzeugkommunikation" (LF_VehComm) Informationen bez. des Betriebszustands des Be- und Entladesystems an das Fahrzeugmanagement.

Die Funktion "Hebevorrichtung steuern" LF_LftMdlCtrl kontrolliert die Funktionsweise der Hebevorrichtung, 10 basierend auf:
1. den vom Funktionsblock "Betriebsmodi steuern" (LF_OpMdCtrl) gesetzten Betriebsmodus,
2. den vom Funktionsblock "Überwachung" (LF_IntLdhMon) gelieferten Sensorinformationen

Die Kontrollfunktion der Hebevorrichtung 10 wird so realisiert, dass die Funktion "Hebevorrichtung steuern" LF_LftMdlCtrl Kommandos an dem Funktionsblock "Aktuatoren steuern" LF_ActCtrl schickt und Statusinfos von dem Funktionsblock "Aktuatoren steuern" LF_ActCtrl empfängt.

Die Funktion "Ladebodenmodul steuern" LF_LdrCrrCtrl kontrolliert die Funktionsweise des Ladebodenmoduls 20, basierend auf:
1. den vom Funktionsblock "Betriebsmodi steuern" (LF_OpMdCtrl) gesetzten Betriebsmodus,
2. den vom Funktionsblock "Überwachung" (LF_IntLdhMon) gelieferten Sensorinformationen

Die Kontrollfunktion des Ladebodenmoduls 20 wird so realisiert, dass die Funktion "Ladebodenmodul steuern" LF_LdrCrrCtrl Kommandos an dem Funktionsblock "Aktuatoren steuern" LF_ActCtrl schickt, und Statusinfos von dem Funktionsblock "Aktuatoren steuern" LF_ActCtrl empfängt.

Die Funktion "Halterungsmodul steuern" LF_SprtMdlCtrl kontrolliert die Funktionsweise des Hebevorrichtung-Halterungmoduls 60, basierend auf:
1. den vom Funktionsblock "Betriebsmodi steuern" (LF_OpMdCtrl) gesetzten Betriebsmodus,
2. den vom Funktionsblock "Überwachung" (LF_IntLdhMon) gelieferten Sensorinformationen

Die Kontrollfunktion des Hebevorrichtung-Halterungsmoduls 60 wird so realisiert, dass die Funktion "Halterungsmodul steuern" LF_SprtMdlCtrl Kommandos an dem Funktionsblock "Aktuatoren steuern" LF_ActCtrl schickt, und Statusinfos von dem Funktionsblock "Aktuatoren steuern" LF_ActCtrl empfängt.

Die Funktion "Aktuatoren steuern" LF_ActCtrl" macht die Umwandlung von logischen Kommandos, die von den verschiedenen Kontrollfunktionen empfangen wurden (LF_LftMdlCtrl, LF_LdrCrrCtrl, LF_SprtMdlCtrl), in physikalischen Steuersignale, die von den verschiedenen Aktuatoren gebraucht werden, um die Kundenfunktionen zu erfüllen. Die Funktion "Aktuatoren steuern" LF_ActCtrl wird so realisiert, dass einem logischen Kommando, das einem Bewegungsprofil entspricht (z. Bsp. "Querstange 130 ohne Last 5 nach oben bewegen"), ein kalibriertes Profil von Steuersignalen, die spezifisch einem Aktuator zugeordnet sind (z. Bsp. BLDC - Motor / Bürstenlosen Gleichstrom-Elektromotor) zugeordnet ist. Zur Regelung der Steuersignale werden physikalische Statusinformationen bewertet (z. Bsp. aus dem Phasenstrom des BLDC Motor-Stators wird die Last ermittelt, und eine eventuelle Überlast oder ein mechanisches Defekt detektiert). Des Weiteren ermöglichen Temperatursensoren eine Überlastsituation zu detektieren/plausibilisieren, um so die Steuersignale zu regeln, dass dauerhafte Materialfehler vermieden werden können (z. Bsp. in einer Überlastsituation wird erst der Elektromotor mit einem "Iangsamen Bewegungsprofil" gesteuert).

Die Funktion "Aktuatoren steuern" LF_ActCtrl wird so realisiert, dass Informationen die den physikalischen Status eines Aktuators spiegeln, an dem übergeordneten Steuerungsmodul (LF_LftMdlCtrl, LF_LdrCrrCztl, LF_SprtMdlCtrl) kommuniziert werden. So kann das übergeordnete Steuerungsmodul den physikalischen Aktuator-Status einem logischen Funktionsstatus zuordnen (z. Bsp. "Hebevorrichtung überlastet") und diesen Status an dem Funktionsmodul "Betriebsmodi steuern" LF_OpMdCtrl kommunizieren.

Die Funktion "Ladevorrichtung Überwachen" LF_IndLdhMon dient als zusätzliches Überwachungsmechanismus, um Fehler in dem System zu erkennen und eine Notabschaltung einzuleiten. Dafür werden Informationen von den Sensoren gesammelt und ausgewertet, zusammen mit Statusinformationen der Steuerungsmodule (LF_LftMdlCtrl, LF_LdrCrrCztl, LF_SprtMdlCtrl).

Die Funktion "Bedienmodule steuern" LF_UsrMdlCtrl steuert die Kommunikation zwischen den Bedienmodulen 310, 320, 330 und die Funktion "Betriebsmodi steuern" LF_OpMdCtrl. Dafür besteht die Kommunikation zwischen den Bedienmodulen 310, 320, 330 und der Steuereinheit aus den folgenden Abläufen:
1. Externe Bedienmodule 320, 330 identifizieren: die Steuereinheit authentifiziert über die vordefinierten Kommunikationskanäle (z. Bsp. Bluetooth für die mobile App) jedes aktive Bedienmodul 320, 330 mittels eines Authentifizierungsprotokolls (z.B. Diffie-Hellmann-Protokoll). Somit können Kommandos und Statusinfos nur mit den "eigenen" Bedienmodule ausgetauscht werden.
2. Authentifizierte Bedienmodule 320, 330 sind dann als betriebsbereit markiert und für Kommandos-Austausch freigegeben. Ein Kommando, empfangen von einem der aktiven Bedienmodulen, wird nach Plausibilisierung ausgeführt. Widersprüchliche / sich gegenseitig ausschließende Kommandos werden ignoriert.
3. Um ein authentifiziertes Bedienmodul zu überwachen und Ausfälle zu erkennen (z. Bsp. unplausible Kommandos durch elektrische Wackelkontakte) werden während der Betriebsdauer Statusnachrichten zyklisch ausgetauscht. Als Überprüfungsprotokoll kann eines von vielen etablierten Überprüfungsprotokollen verwendet werden (Frage-Antwort-Folgen, Checksumme, Sequenznummern, Kommando-Echo).
4. Bei Erkennung eines Bedienmodulfehlers werden weitere Kommandos von dem betroffenen Modul nicht mehr akzeptiert, eine Statusinformation kann gegebenenfalls dem Anwender über eines der Fahrzeug-Informationsdisplays gemeldet werden. In diesem Fall soll eine "Mechanische Entriegelung" ermöglichen, eine eventuell "hängende Last" wieder auf den Boden abzusenken.

Die Funktion "Fahrzeugkommunikation" LF_VehComm sichert den notwendigen Informationsfluss zwischen der Steuerung des Be- und Entladesystems und dem Fahrzeugmanagement.

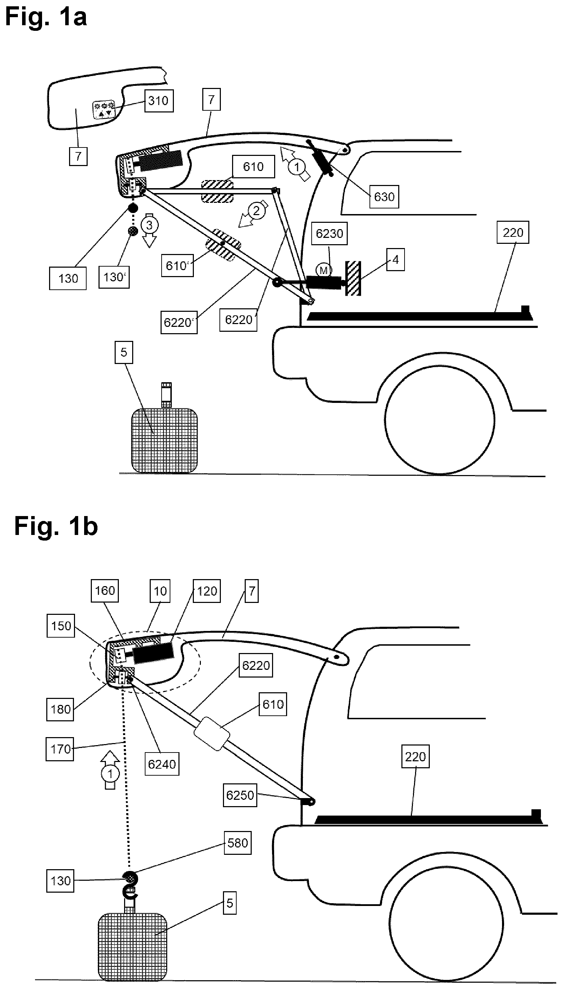

Der Ablauf eines Be- und Entladevorgangs mit Hilfe des erfindungsgemäßen Be- und Entladesystems ist in chronologischer Reihenfolge in den Figuren 1a bis 1e dargestellt und soll nachfolgend näher beschrieben werden. Jede Abbildung zeigt ggf. nur ein Teil einer möglichen Realisierung eines Teils des Systems, so dass in jeder Abbildung einige Realisierungsaspekte (die nicht im Fokus der Erklärung liegen) nicht dargestellt sind.

In der Phase 1 (siehe Figur 1a) "Erreichung der Arbeitsposition" wird die Heckklappe 7 geöffnet, z. Bsp. durch die Mitwirkung von Gasfedern 630 und elektromotorischen Aktuatoren 6230. Die Positionshalter 610 werden in ihre Arbeitsstellung gebracht, was durch die Referenznummer 610' gekennzeichnet ist. Die Lastträgerstange 130 wird aus der Parkposition in die Bereitschaftsposition (Referenzzeichen 130') manuell verbracht, um in den nachfolgenden Schritten das abgestellte Gepäckstück 5 aufnehmen zu können.

Figur 1b zeigt die Phase 2 "Lastaufnahme". Hier wird ein Gepäckstück 5, das an der Querstange 130 mittels eines Befestigungselementes 580 gehalten ist, durch die Hebevorrichtung 10 mit Hilfe der zwei Lastkabel 170 in die höchste Position gehoben. Dadurch, dass die Steuereinheit den Weg der Lastkabel 170 ermitteln kann, kann die Steuereinheit auch berechnen, wie hoch das Laststück 5 gehoben werden muss, um es danach auf dem Ladeboden 220 senken zu können.

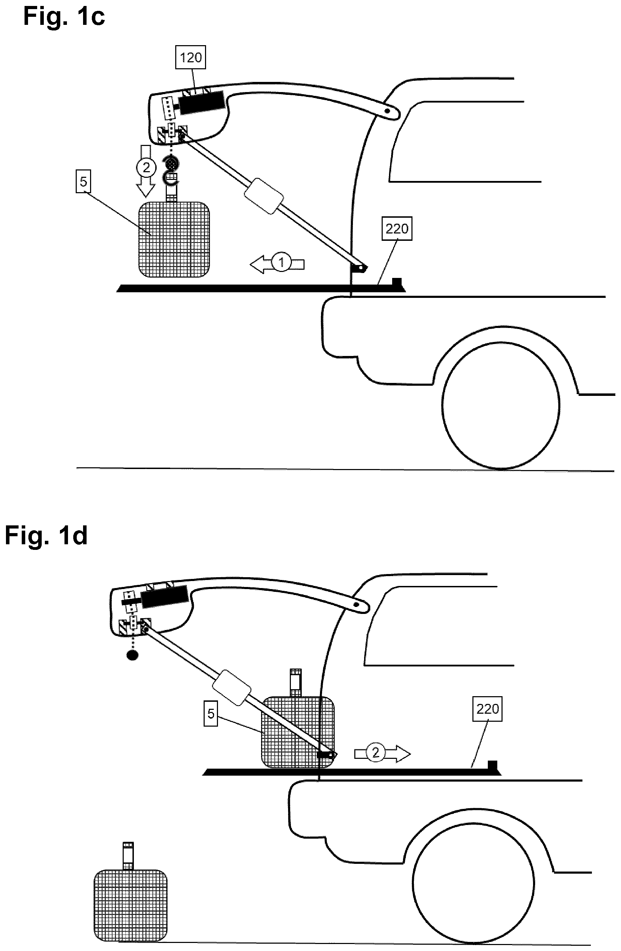

In der Phase 3 "Beladung", dargestellt in Figur 1c, wird die mobile Ladeplatte 220 ausgefahren, während die Last 5 ausreichend gehoben ist, um eine Kollision mit der mobilen Ladeplatte 220 zu vermeiden. Nachdem sich die Ladeplatte 220 in der Position für die Lastaufnahme befindet, wird die Last 5 auf der Ladeplatte 220 gesenkt.

In der Phase 4 "Verstauen", gezeigt in Figur 1d, wird die mobile Ladeplatte 220 wieder in den Kofferraum eingefahren. Durch die regelbare Positionierung der mobilen Ladeplatte 220 können die Phasen 2 bis 4 mehrmals wiederholt werden, um mehrere Last-Stücke 5 beladen zu können. In der Phase "Abschluss der Beladung", dargestellt in Figur 1e, wird die Ladeplatte 220 arretiert, die Lastträgerstange 130 an dem Kofferraumdeckel befestigt (Parkposition) und der Positionshalter 610 in Parkposition gebracht.

## Patentansprüche

1. Kraftfahrzeug mit wenigstens einer, in der Heckklappe (7) integrierten Hebevorrichtung (10) umfassend ein elektromotorisches Zugseilsystem bestehend aus wenigstens einem Lastkabel (170),
wenigstens einer elektromotorisch angetriebenen Aufnahmerolle (150) zum Auf- und Abspulen des Lastkabels (170) und
einer Kabelführung (180), mittels dieser wenigstens zwei parallel verlaufenden Kabelstränge aus der Heckklappe (7) in Richtung des Bodens herausgeführt sind, wobei die parallel verlaufenden Kabelstränge endseitig mittels einer Trägerstange (130) als Lastaufnahmemittel verbunden sind,
**dadurch gekennzeichnet, dass** wenigstens ein Montagerahmen (160) für die Hebevorrichtung (10) in der Heckklappe (7) vorgesehen ist, an diesem die wenigstens eine Aufnahmerolle (150) inklusive elektromotorischem Antrieb (120) und gegebenenfalls die Kabelführung (180) gelagert sind und wenigstens ein, vorzugsweise zwei Positionierungselemente (620) vorgesehen sind, die endseitig am Montagerahmen (160) gelagert und mit ihrem anderen Ende am Fahrzeugrahmen (4) des Kraftfahrzeuges gelagert sind, so dass eine unmittelbare Kraftübertragung von dem Montagerahmen (160) in die Fahrzeugkarosserie erfolgt.

2. Kraftfahrzeug nach Anspruch 1, **dadurch gekennzeichnet, dass** dass sich der Montagerahmen (160) in Einbaulage innerhalb der Hecklappe (7) nahezu über die gesamte Breite der Heckklappe (7) erstreckt.

3. Kraftfahrzeug nach einem der vorstehenden Ansprüche, **dadurch gekennzeichnet, dass** die Kabelführung (180) pro Kabelstrang jeweils eine Rollenanordnung (1820, 1830) aufweist, um das Lastkabel (170) an der gewünschten Austrittstelle aus der Hecklappe (7) herauszuführen, wobei die Rollenanordnungen (1820, 1830) vorzugsweise an den freien Enden des Montagerahmens (160) gelagert sind, während die wenigstens eine Aufnahmerolle (150) mittig zwischen den Rollenanordnungen (1820, 1830) am Montagerahmen (160) gelagert ist.

4. Kraftfahrzeug nach einem der vorstehenden Ansprüche, **dadurch gekennzeichnet, dass** das Lastkabel (170) aus zwei separaten Kabeln oder getrennten Kabelabschnitten (171, 172) mit gleicher Länge besteht und die Aufnahmerolle (150) zwei, auf der Rollenachse nebeneinanderliegende Spulen zum Auf- und Abwickeln der Kabel bzw. Kabelabschnitte aufweist.

5. Kraftfahrzeug nach einem der vorstehenden Ansprüche, **dadurch gekennzeichnet, dass** der elektromotorische Antrieb der Aufnahmerolle (150) einen Elektromotor (120) inklusive Spindel, Getriebe (110) und Bremse (140), insbesondere mi Notbrems- und manueller Freigabefunktion im Falle einer zuvor ausgelösten Notbremsung, umfasst und/oder mit einer Sensorik (1210) zur Messung des aufgenommenen Lastgewichtes und/oder des Hubweges und/oder der Betriebstemperatur ausgestattet ist.

6. Kraftfahrzeug nach einem der vorstehenden Ansprüche, **dadurch gekennzeichnet, dass** das wenigstens eine Positionierungselement (620) eine Hebelkinematik (6220) umfasst, die mit einer Öffnungs-/Schliessbewegung der Fahrzeugheckklappe (7) verstellbar ist, wobei vorzugsweise wenigstens ein Antrieb (6230), insbesondere elektrischer oder elektro-hydraulischer Antrieb, zur Betätigung der Hebelkinematik des Positionierungselementes (620) vorgesehen ist.

7. Kraftfahrzeug nach Anspruch 6, **dadurch gekennzeichnet, dass** das wenigstens eine Positionierungselemente (620) ein Fixierungsmittel (610) zum Feststellen der Hebelkinematik (6220) umfasst, wobei vorzugsweise wenigstens eine Sensorik (640, 641) zur Detektion des Zustands des Fixierungsmittels (610) bzw. der Hebelkinematik (6220) vorgesehen ist.

8. Kraftfahrzeug nach einem der vorstehenden Ansprüche 6 bis 8, **gekennzeichnet durch** eine Steuereinheit mit mindestens einem Bedienmodul, die konfiguriert sind, eine Freigabe des elektromotorischen Antriebs (120) der Aufnahmerolle (150) gemäß eines Bedienkonzeptes und/oder in Abhängigkeit vom Zustand der Positionierungselemente (620) bzw. der Hebelkinematik (6220) und/oder des Kraftfahrzeuges zu steuern.

9. Kraftfahrzeug nach einem der vorstehenden Ansprüche, **dadurch gekennzeichnet, dass** das Kraftfahrzeug wenigstens ein ein- und ausfahrbares Ladeboden-modul umfasst..

10. Kraftfahrzeug nach Anspruch 9, **dadurch gekennzeichnet, dass** das Ladebodenmodul folgendes umfasst:
ein Bodengestell, an dessen Unterseite ein oder mehrere Stützelemente zur Abstützung auf dem Laderaumboden des Kraftfahrzeuges angeordnet und auf dessen Oberseite ein oder mehrere Tragrollen installiert sind,
eine Ladeplatte, die mit Hilfe der Tragrollen relativ zum Bodengestell in Längsrichtung verschieblich auf diesem gelagert ist, und
wenigstens zwei Führungsmodule mit Verbindungsstellen zur Fixierung an den Seitenwänden des Fahrzeugladeraumes, wobei die Führungsmodule jeweils wenigstens eine, auf der Oberfläche der Ladeplatte abrollende Führungsrolle aufweisen, um die Ladeplatte entlang ihrer Längsseiten zu führen.

11. Kraftfahrzeug nach Anspruch 10, **dadurch gekennzeichnet, dass** die Führungsmodule jeweils wenigstens eine laterale Führungsrolle aufweisen, die entlang der Längskante der Ladeplatte abrollt.

12. Kraftfahrzeug nach einem der Ansprüche 10 oder 11, **dadurch gekennzeichnet, dass** ein zumindest abschnittsweise um die Ladeplatte verlaufender und mit dem Bodengestell verbundener Rahmen vorgesehen ist, der vorzugsweise ein oder mehrere Verriegelungselemente umfasst, um die Ladeplatte gegenüber dem Bodengestell temporär festzulegen.

13. Kraftfahrzeug nach einem der Ansprüche 10 bis 12, **dadurch gekennzeichnet, dass** wenigstens ein Antrieb zur motorischen Bewegung der Ladeplatte relativ zum Bodengestell vorgesehen, insbesondere zum Antrieb wenigstens einer Tragrolle, und/oder wenigstens eine, in das Bodengestell integrierte Lastsensorik zur Erfassung des Lastgewichtes der Beladung der Ladelatte vorgesehen ist.

## Claims

1. Motor vehicle, comprising at least one lifting device (10) integrated into the hatchback (7), comprising an electric motor pull rope system consisting of at least one load cable (170);
at least one electric motor driven take up roller (150) for reeling the load cable (170) up and off; and
a cable guide (180), by means of which at least two cable harnesses that extend in parallel can be led out of the hatchback (7) in the direction of the floor, wherein the cable harnesses extending in parallel as load reception means are connected at the end side by means of a carrier rod (130),
**characterized in that** at least one installation frame (160) is provided for the lifting device (10) in the hatchback (7), at which the at least one take up roller (150), including an electric motor drive (120), and optionally the cable guide (180) are supported, and at least one, preferably two, positioning elements (620) are provided that are supported on the installation frame (160) at the end side and whose other ends are supported at the vehicle frame (4) of the motor vehicle such that a direct force transmission from the installation frame (160) into the vehicle body takes place.

2. Motor vehicle in accordance with Claim 1, **characterized in that** the installation frame (150) extends within the hatchback (7) over practically the total width of the hatchback (7) in the installed position.

3. Lifting device in accordance with one of the preceding claims, **characterized in that** the cable guide (180) per cable harness has a respective roller arrangement (1820, 1830) to guide the load cable (170) out of the hatchback (7) at the desired exit point, with the roller arrangements (1820, 1830) preferably being supported at the free ends of the installation frame (160), while the at least one take up roller (150) is supported centrally between the roller arrangements (1820, 1830) at the installation frame (160).

4. Lifting device in accordance with one of the preceding claims, **characterized in that** the load cable (170) consists of two separate cables or separate cable sections (171, 172) of the same length and the take up roller (150) has two reels for winding and unwinding the cables or cable sections disposed next to one another on the roller axis.

5. Lifting device in accordance with one of the preceding claims, **characterized in that** the electric motor drive of the take up roller (150) comprises an electric motor (120), including a spindle, transmission (110), and brake (140), in particular with an emergency brake and a manual release function in the event of a previously triggered emergency brake and/or is equipped with a sensor system (1210) for measuring the taken up load weight and/or the stroke distance and/or the operating temperature.

6. Lifting device in accordance with one of the preceding claims, **characterized in that** the at least one positioning element (620) comprises lever kinematics (6220) that are adjustable by an opening/closing movement of a vehicle hatchback (7), wherein at least one drive (6230), in particular an electric or electrohydraulic drive, is provided to actuate the lever kinematics of the positioning element (620).

7. Lifting device in accordance with claim 6, **characterized in that** the at least one positioning element (620) comprises a fixing means (610) for fixing the lever kinematics (6220), with at least one sensor system (640, 641) preferably being provided for the detection of the state of the fixing means (610) or of the lever kinematics (6220).

8. Lifting device in accordance with one of the preceding claims 6 to 8, **characterized by** a control unit having at least one operating module that is configured to control a release of the electric motor drive (120) of the take up roller (150) in accordance with an operating concept and/or in dependence on the state of the positioning elements (620) or of the lever kinematics (6220) and/or of the motor vehicle.

9. Motor vehicle in accordance with one of the preceding claims, **characterized in that** the motor vehicle comprises at least one retractable and extendable loading floor module.

10. Motor vehicle in accordance with claim 9, **characterized in that** the loading floor module comprises:
a floor structure at whose lower side one or more support elements are arranged for support on the loading space floor of a motor vehicle and one or more carrier rollers are installed at its upper side;
a loading shelf that is displaceably supported on the floor structure in the longitudinal direction relative to the floor structure with the aid of the carrier rollers; and
at least two guide modules having connection points for fixing at the side walls of the vehicle loading space, with the guide modules each having at least one guide roller that rolls off on the surface of the loading shelf to guide the loading shelf along its longitudinal sides.

11. Motor vehicle in accordance with claim 10, **characterized in that** the guide modules each have at least one lateral guide roller that rolls off along the longitudinal edge of the loading shelf.

12. Motor vehicle in accordance with one of the claims 10 or 11, **characterized in that** a frame is provided that at least sectionally runs around the loading shelf, is connected to the floor structure, and preferably comprises one or more locking elements to temporarily fix the loading shelf with respect to the floor structure.

13. Motor vehicle in accordance with one of the claims 11 to 12, **characterized in that** at least one drive is provided for the motorized movement of the loading shelf relative to the floor structure, in particular for the drive of at least one carrier roller; and/or **in that** at least one load sensor system integrated in the floor structure is provided to detect the load weight of the load on the loading shelf.

## Revendications

1. Véhicule automobile avec au moins un dispositif de levage (10) intégré dans le hayon arrière (7) comprenant un système de câble de traction à moteur électrique constitué
d'au moins un câble de charge (170),
d'au moins une bobine de réception (150) entraînée par moteur électrique pour enrouler et dérouler le câble de charge (170) et
d'un guide-câble (180), au moyen duquel au moins deux faisceaux de câbles parallèles sont guidés hors du hayon arrière (7) en direction du sol, les faisceaux de câbles parallèles étant reliés aux extrémités au moyen d'une barre de support (130) en tant que moyen de réception de charge,
**caractérisé en ce qu'**au moins un cadre de montage (160) pour le dispositif de levage (10) est prévu dans le hayon arrière (7), sur lequel sont logés l'au moins un rouleau de réception (150), y compris l'entraînement par moteur électrique (120) et éventuellement le guide-câble (180), et au moins un, de préférence deux éléments de positionnement (620) sont prévus, qui sont logés à l'extrémité sur le cadre de montage (160) et à leur autre extrémité sont logés sur le cadre de véhicule (4) du véhicule automobile, de telle sorte qu'une transmission de force directe du cadre de montage (160) dans la carrosserie du véhicule a lieu.

2. Véhicule automobile selon la revendication 1, **caractérisé en ce que** le cadre de montage (160) s'étend, en position installée à l'intérieur du hayon arrière (7), sur presque toute la largeur du hayon arrière (7).

3. Véhicule automobile selon l'une quelconque des revendications précédentes, **caractérisé en ce que** le guide-câble (180) présente un agencement de rouleaux (1820, 1830) par faisceau de câbles, afin de guider le câble de charge (170) hors du hayon arrière (7) à l'emplacement de sortie souhaité, les agencements de rouleaux (1820, 1830) étant de préférence logés sur les extrémités libres du cadre de montage (160), tandis que l'au moins un rouleau de réception (150) est logé sur le cadre de montage (160) au centre entre les agencements de rouleaux (1820, 1830).

4. Véhicule automobile selon l'une quelconque des revendications précédentes, **caractérisé en ce que** le câble de charge (170) est constitué de deux câbles séparés ou sections de câble séparées (171, 172) de même longueur et le rouleau de réception (150) présente deux bobines juxtaposées sur l'axe de rouleau pour enrouler et dérouler les câbles ou sections de câble.

5. Véhicule automobile selon l'une quelconque des revendications précédentes, **caractérisé en ce que** l'entraînement par moteur électrique de la bobine de réception (150) comprend un moteur électrique (120) avec broche, engrenage (110) et frein (140), notamment avec fonction de freinage d'urgence et de libération manuelle en cas de freinage d'urgence préalablement déclenché, et/ou est équipé d'un système de détection (1210) pour mesurer le poids de charge reçu et/ou la course de levage et/ou la température de fonctionnement.

6. Véhicule automobile selon l'une quelconque des revendications précédentes, **caractérisé en ce que** l'au moins un élément de positionnement (620) comprend une cinématique de levier (6220) qui est réglable avec un mouvement d'ouverture/fermeture du hayon arrière (7) du véhicule, de préférence au moins un entraînement (6230), notamment un entraînement électrique ou électrohydraulique, étant prévu pour actionner la cinématique de levier de l'élément de positionnement (620).

7. Véhicule automobile selon la revendication 6, **caractérisé en ce que** l'au moins un élément de positionnement (620) comprend un moyen de fixation (610) pour bloquer la cinématique de levier (6220), de préférence au moins un système de détection (640, 641) étant prévu pour détecter l'état du moyen de fixation (610) ou de la cinématique de levier (6220).

8. Véhicule automobile selon l'une quelconque des revendications 6 à 8 précédentes, **caractérisé par** une unité de commande avec au moins un module de contrôle, qui sont configurés pour commander une libération de l'entraînement par moteur électrique (120) du rouleau de réception (150) selon un concept de contrôle et/ou en fonction de l'état des éléments de positionnement (620) ou de la cinématique de levier (6220) et/ou du véhicule automobile.

9. Véhicule automobile selon l'une quelconque des revendications précédentes, **caractérisé en ce que** le véhicule automobile comprend au moins un module de plancher de chargement rétractable et extensible.

10. Véhicule automobile selon la revendication 9, **caractérisé en ce que** le module de plancher de chargement comprend :
un châssis de plancher, sur le côté inférieur duquel sont agencés un ou plusieurs éléments d'appui pour s'appuyer sur le plancher de l'espace de chargement du véhicule automobile et sur le côté supérieur duquel sont installés un ou plusieurs rouleaux porteurs,
un plateau de chargement qui est logé sur le châssis de plancher de manière à pouvoir se déplacer dans la direction longitudinale par rapport à celui-ci à l'aide des rouleaux porteurs, et
au moins deux modules de guidage avec des emplacements de liaison pour la fixation sur les parois latérales de l'espace de chargement du véhicule, les modules de guidage présentant chacun au moins un rouleau de guidage roulant sur la surface du plateau de chargement pour guider le plateau de chargement le long de ses côtés longitudinaux.

11. Véhicule automobile selon la revendication 10, **caractérisé en ce que** les modules de guidage présentent chacun au moins un rouleau de guidage latéral qui roule le long des bords longitudinaux du plateau de chargement.

12. Véhicule automobile selon l'une quelconque des revendications 10 ou 11 , **caractérisé en ce qu'**il est prévu un cadre s'étendant au moins par sections autour du plateau de chargement et relié au châssis de plancher, qui comprend de préférence un ou plusieurs éléments de verrouillage pour immobiliser temporairement le plateau de chargement par rapport au châssis de plancher.

13. Véhicule automobile selon l'une quelconque des revendications 10 à 12, **caractérisé en ce qu'**il est prévu au moins un entraînement pour le déplacement motorisé du plateau de chargement par rapport au châssis de plancher, notamment pour l'entraînement d'au moins un rouleau porteur, et/ou au moins un système de détection de charge intégré dans le châssis de plancher pour détecter le poids de charge du chargement du plateau de chargement.
